# EUROPÄISCHE PATENTANMELDUNG

(11) **EP 4 357 228 A1**
(43) Veröffentlichungstag der Anmeldung: **24.04.2024**
(21) Anmeldenummer: 23020469.5
(22) Anmeldetag: 12.10.2023
(51) Int. Cl.: B62J 43/13, B62J 43/28, B62K 19/34, B62M 6/55, B62M 6/90

(54) **ELEKTRISCHE FAHRRAD-ANTRIEBSEINHEIT SOWIE FAHRRADRAHMEN, RAHMENSCHNITTSTELLEN-EINHEIT UND ENERGIESPEICHEREINRICHTUNG FÜR ELEKTRISCHE FAHRRAD-ANTRIEBSEINHEIT**

(30) Priorität: 20.10.2022 DE 102022127802
(71) Anmelder: SRAM Deutschland GmbH, 97424 Schweinfurt (DE)
(72) Erfinder: Braedt, Henrik, 97456 Dittelbrunn-OT Hambach (DE); Heyna, Sebastian, 97456 Dittelbrunn-OT Hambach (DE)

(57) **Zusammenfassung**

Die vorliegende Offenbarung betrifft eine elektrische Fahrrad-Antriebseinheit (DU) zur Anordnung in einem Tretlagerbereich (R) eines Fahrradrahmens. Die Antriebseinheit (DU) weist eine Tretlagerbaugruppe (AB) mit einer Tretlagerwelle (SB) sowie eine elektrische Motoreinrichtung (ME) und eine Energiespeichereinrichtung (SE) zur Energieversorgung der Motoreinrichtung auf. Die Energiespeichereinrichtung (SE) ist in einem einen geschlossenen Rohrquerschnitt aufweisenden Unterrohr TL des Fahrradrahmens (1) anordenbar und koaxial zu einer Längsachse des Unterrohrs TL aus dem Unterrohr TL entnehmbar.

Die vorliegende Offenbarung betrifft außerdem einen Fahrradrahmen (1) bzw. eine Rahmenschnittstellen-Einheit (IU) sowie eine Energiespeichereinrichtung (SE) für die elektrische Fahrrad-Antriebseinheit (DU).

Die Energiespeichereinrichtung (SE) ist in einem betriebsbereit in den Fahrradrahmen (1) eingebauten Zustand der Antriebseinheit (DU) unmittelbar an einem Gehäuse (HM) der Motoreinrichtung (ME) oder in einem gemeinsamen Gehäuse (HC) von Motoreinrichtung (ME) und Energiespeichereinrichtung (SE) befestigt.

## Beschreibung

Die vorliegende Offenbarung betrifft eine elektrische Fahrrad-Antriebseinheit nach dem Oberbegriff von Anspruch 1, einen Fahrradrahmen bzw. eine Rahmenschnittstellen-Einheit nach dem Oberbegriff von Anspruch 24 sowie eine Energiespeichereinrichtung nach dem Oberbegriff von Anspruch 27.

In der nachfolgenden Beschreibung verwendete und nicht weiter konkretisierte Orts- bzw. Richtungsangaben wie "links", "rechts", "vorne", "hinten", "oben", "unten", "Seitenansicht" usw. entsprechen einer Fahrerperspektive auf einem Fahrrad.

Die Offenbarung der unveröffentlichten deutschen Patentanmeldung mit dem DPMA-Aktenzeichen 10 2022 109 481.2 wird durch Bezugnahme in die Offenbarung der vorliegenden Patentanmeldung eingeschlossen.

Geländegängige Fahrräder mit elektrischem Unterstützungsantrieb erfreuen sich zunehmender Beliebtheit. Diese auch als E-Mountainbike oder abgekürzt E-MTB bezeichneten Fahrräder werden in Kategorien wie beispielsweise "Cross-Country", "Trail", "Enduro" und "Downhill" eingeteilt bzw. auch sportlich eingesetzt.

Bei solchen Einsätzen treten hohe Anforderungen an Robustheit, Rahmensteifigkeit und "Handling" des E-MTB auf. Beim Handling des E-MTB ist vor allem die Schwerpunktlage des Fahrrads von Bedeutung. Ein hoher Schwerpunkt des Fahrrads beeinträchtigt die Kurvenlage und erhöht das Risiko von Überschlägen bei starker Bremsverzögerung oder in steilen Abfahrtspassagen.

Von besonderer Bedeutung ist auch die Distanz zwischen dem Fahrrad-Schwerpunkt und der Hinterradachse. Je weiter sich der Schwerpunkt des Fahrrads in Fahrtrichtung vorne befindet, desto höher ist die Gefahr von Überschlägen, und desto schwieriger wird es für den Fahrer, das Vorderrad anzuheben, insbesondere in Fällen ohne Unterstützung eines Antriebsdrehmoments.

Das Anheben des Vorderrades ist eine der wichtigsten Fahrtechniken, die in den unterschiedlichsten Fahrsituationen angewandt wird. Auf diese Weise lassen sich größere Hindernisse und Stufen überwinden, oder mit hoher Geschwindigkeit Bodenwellen überfahren. Im Vergleich zu Fahrrädern bzw. Mountainbikes ohne Unterstützungsantrieb ist diesbezüglich vor allem das Gewicht der Akkus und des Motors von Bedeutung.

Weiterhin ist bei E-Mountainbikes der Abstand zwischen Hinterradachse und Tretlagerwelle im Vergleich zum Mountainbike ohne Zusatzantrieb tendenziell vergrößert, da der Elektromotor auch Bauraum im Bereich der Tretlagerwelle einnimmt, und da somit dort weniger radialer Freiraum für den Hinterradreifen zur Verfügung steht. Bei vollgefederten Fahrrädern wird durch den elektrischen Zusatzantrieb auch der Bauraum für die aus Stabilitätsgründen üblicherweise erforderliche Brücke zwischen den Kettenstreben im Bereich des Tretlagers beeinträchtigt. In Abhängigkeit von der für die Hinterradfederung verwendeten Hinterbaukinematik kann auch ein Bauraumkonflikt mit entsprechenden Drehgelenken der Hinterradfederung entstehen.

Überdies wird die Rahmensteifigkeit sowie das Rahmengewicht bei E-MTBs meist durch offene Unterrohrkonstruktionen kompromittiert, die bei bekannten E-MTBs zur Aufnahme der Antriebsbatterie zumeist erforderlich sind. Insbesondere die Torsionsbelastung durch Pedallasten oder auch Momenteintrag über den Steuersatz können über ein Unterrohr mit intaktem Rohrquerschnitt wesentlich besser aufgenommen werden, da bei einem geschlossenen Rohrquerschnitt das Widerstandsmoment gegen Torsion wesentlich höher als bei einem derartigen U-förmigen Profilquerschnitt ist.

Hieraus folgt auch, dass ein geschlossener Rohrquerschnitt einen besseren Quotienten aus Steifigkeit und Gewicht besitzt als die bekannten offenen Profilquerschnitte. Weiterhin erhöhen Verbindungselemente zur Aufnahme und Befestigung von Antriebsbatterien im oder am Unterrohr ebenso wie zwischen Batterie und Antrieb verlaufende Strom- und Signalkabel die Komplexität und das Gewicht des Fahrrads.

Ferner wird durch die üblicherweise erhebliche Distanz derartiger Antriebsbatterien zur Hinterradachse der Schwerpunkt des Fahrrads zum Nachteil des Handlings weit nach vorne verlagert.

Ausgehend von dem vorstehend beschriebenen Stand der Technik ist es die Aufgabe der vorliegenden Offenbarung, eine Lösung zur Anordnung bzw. Integration des Energiespeichers und der Antriebseinheit für ein E-Mountainbike bereitzustellen, mit der sich die oben beschriebenen Nachteile überwinden lassen
Diese Aufgabe wird durch eine elektrische Fahrrad-Antriebseinheit zur Anordnung in einem Tretlagerbereich eines Fahrradrahmens mit den Merkmalen des Patentanspruchs 1, durch einen Fahrradrahmen bzw. eine Rahmenschnittstellen-Einheit für die elektrische Fahrrad-Antriebseinheit mit den Merkmalen des Patentanspruchs 24 und durch eine Energiespeichereinrichtung für die eine elektrische Fahrrad-Antriebseinheit mit den Merkmalen des Patentanspruchs 27 gelöst. Bevorzugte Ausführungsformen sind Gegenstand der Unteransprüche. Die Begriffe "Energiespeichereinrichtung" und "Batterie" werden im nachfolgenden synonym zueinander verwendet.

Wenn nachfolgend von einem "Fahrradrahmen" oder von einer "Rahmenschnittstellen-Einheit" im Zusammenhang mit der Befestigung einer elektrischen Fahrrad-Antriebseinheit an einem Fahrradrahmen bzw. an einer Rahmenschnittstellen-Einheit die Rede ist, so ist jeweils alternativ ein Fahrradrahmen oder eine Rahmenschnittstellen-Einheit gemeint auch dann, wenn einmal nicht beide Begriffe genannt sein sollten.

Wie der nachfolgenden Beschreibung an verschiedenen Stellen zu entnehmen ist, kann die elektrische Fahrrad-Antriebseinheit gemäß der vorliegenden Offenbarung beispielsweise entweder direkt in einen mit entsprechenden Schnittstellen versehenen Fahrradrahmen eingebaut werden, oder die elektrische Fahrrad-Antriebseinheit kann in eine mit entsprechenden Schnittstellen versehene Rahmenschnittstellen-Einheit eingebaut werden, welche wiederum Teil eines Fahrradrahmens sein oder werden kann.

Gattungsgemäß umfasst die Antriebseinheit eine elektrische Motoreinrichtung sowie eine Tretlagerbaugruppe mit einer Tretlagerwelle zur Aufnahme der Tretkurbeln des Fahrrads. Gattungsbildend ist die Motorwelle koaxial oder achsparallel zur Tretlagerwelle angeordnet. Die Antriebseinheit umfasst weiterhin eine Energiespeichereinrichtung zur Energieversorgung der Motoreinrichtung.

Die Energiespeichereinrichtung ist in einem betriebsbereit in den Fahrradrahmen eingebauten Zustand der Antriebseinheit zumindest zu einem wesentlichen Teil der Energiespeichereinrichtung in einem Unterrohr des Fahrradrahmens anordenbar. "Zu einem wesentlichen Teil" soll im Sinne der vorliegenden Offenbarung bedeuten, dass die Energiespeichereinrichtung zumindest zu einem Drittel ihrer im eingesetzten Zustand entlang einer Längsachse des Unterrohrs verlaufenden Längenabmessung in dem Unterrohr anordenbar ist.

Wie eingangs beschrieben, weist das Unterrohr im Sinne einer hohen Biege- und Torsionssteifigkeit einen geschlossenen Rohrquerschnitt auf. Dementsprechend ist die Energiespeichereinrichtung zur Entnahme aus dem Fahrradrahmen in einer koaxial zu einer Längsachse des Unterrohrs verlaufenden Entnahmerichtung eingerichtet, es handelt sich somit um eine in Fachkreisen als sog. Slide-In Batterie bekannte Energiespeichereinrichtung.

Je nach Ausführung des Motors umfasst eine gattungsgemäße Antriebseinheit zumeist auch ein üblicherweise zusammen mit dem Motor in einem gemeinsamen Motorgehäuse angeordnetes Untersetzungsgetriebe zur Übertragung des unterstützenden Motormoments auf die Tretlagerwelle. Es sind jedoch auch getriebelose Antriebseinheiten zum Direktantrieb der Tretlagerwelle bekannt, auf welche sich die vorliegende Offenbarung ebenfalls erstreckt.

Die Antriebseinheit zeichnet sich aus, dass die Energiespeichereinrichtung in dem betriebsbereit in den Fahrradrahmen eingebauten Zustand der Antriebseinheit unmittelbar an einem Gehäuse der Motoreinrichtung oder in einem gemeinsamen Gehäuse von Motoreinrichtung und Energiespeichereinrichtung befestigt ist.

"Unmittelbar befestigt" soll im Sinne der vorliegenden Offenbarung bedeuten, dass die Energiespeichereinrichtung direkt und insbesondere ohne dem Fahrradrahmen zuzurechnende Zwischenelemente wie beispielsweise Rahmenrohre, Rohrmuffen und dergleichen an einem Gehäuse der Motoreinrichtung oder in einem gemeinsamen Gehäuse von Motoreinrichtung und Energiespeichereinrichtung befestigt ist.

Zunächst einmal bedeutet dies, dass die Energiespeichereinrichtung mit der Motoreinrichtung und mit der Tretlagerbaugruppe, sowie ggf. zusammen mit einem Untersetzungsgetriebe zwischen Motoreinrichtung und Tretlagerwelle, räumlich zusammengelegt und als somit integrierte Antriebseinheit ausgebildet ist, die nach Montage der Antriebseinheit als ebenso integrierte Einheit im Tretlagerbereich des Fahrrades positioniert ist.

Aufgrund der unmittelbaren Verbindung zwischen Energiespeichereinrichtung und Motoreinrichtung lässt sich die Antriebseinheit einschließlich der Energiespeichereinrichtung als im Wesentlichen einstückige Einheit handhaben, auch bevor diese in einen Fahrradrahmen eingebaut ist.

Zudem ermöglicht die unmittelbare Befestigung bzw. Verbindung zwischen Energiespeichereinrichtung und Motoreinrichtung, dass sämtliche erforderlichen Strom- und Datenverbindungen zwischen Energiespeichereinrichtung und Motoreinrichtung auf dem kürzesten Wege innerhalb der Antriebseinheit verlegt werden können, insbesondere ohne dass hierfür etwa freiliegende oder fliegende Kabel- oder Steckerverbindungen erforderlich sind, wie diese im gesamten Stand der Technik weithin üblich sind.

Mit "Tretlagerbereich" ist im Sinne der vorliegenden Offenbarung die unmittelbare räumliche Umgebung des Fahrrad-Tretlagers gemeint, einschließlich der unmittelbaren Endbereiche der an das Tretlager angrenzenden Sattel- und Unterrohre, in Abgrenzung insbesondere zum räumlichen Bereich des gesamten Fahrrad-Unterrohrs bis zum Fahrrad-Steuerkopf, welches beim Stand der Technik üblicherweise die Energiespeichereinrichtung für die elektrische Motoreinrichtung enthält.

Die unmittelbare Befestigung der Energiespeichereinrichtung an einem Gehäuse der Motoreinrichtung oder in einem gemeinsamen Gehäuse von Motoreinrichtung und Energiespeichereinrichtung bedeutet im Sinne der vorliegenden Offenbarung, dass die Energiespeichereinrichtung entweder zusammen mit der Motoreinrichtung der Antriebseinheit in einem gemeinsamen Gehäuse angeordnet ist, oder unmittelbar benachbart zu einem Gehäuse der Motoreinrichtung an diesem befestigt bzw. befestigbar ist.

Im Unterschied zum eingangs beschriebenen Stand der Technik wird die Energiespeichereinrichtung gemäß der vorliegenden Offenbarung in unmittelbarer Nähe zu der Antriebseinheit und damit im Wesentlichen auch auf horizontaler Höhe der Tretlagerbaugruppe positioniert. Daraus resultiert eine vertikal sehr niedrige Schwerpunktlage der integrierten Antriebseinheit, die lediglich durch die Wahrung der jeweils gewünschten Bodenfreiheit im Bereich des Tretlagers limitiert ist.

Weiterhin wird auch der Abstand des Schwerpunkts der Antriebseinheit bzw. des gesamten Fahrrads zur Hinterradachse auf diese Weise vorteilhaft reduziert.

Da bei einem Fahrradrahmen, abgesehen vom Hinterbau, der breiteste Bereich zumeist die Tretlageraufnahme ist, lässt sich mit der Antriebseinheit gemäß der vorliegenden Offenbarung der in Axialrichtung (bezogen auf die Tretlagerwelle) zur Verfügung stehende Bauraum in diesem Bereich deutlich besser nutzen, als dies im Stand der Technik üblich ist.

Dies bedeutet mit anderen Worten, dass insbesondere die Querschnittsdimensionen der Energiespeichereinrichtung (bezogen auf eine Schnittebene parallel zur Achse der Tretlagerwelle) deutlich größer ausfallen können als bei herkömmlichen, im Bereich des Unterrohrs bzw. gänzlich im Unterrohr angeordneten Energiespeichern.

Insbesondere kann der Fahrradrahmen, anders als beim Stand der Technik mit dem zur Batterieentnahme üblicherweise offenen und häufig einen U-förmigen Querschnitt aufweisenden Unterrohr, mit einem intakten, also geschlossenen Unterrohrquerschnitt realisiert werden, wodurch sich die Biege- und Torsionssteifigkeiten des Unterrohrs und damit des Fahrradrahmens entscheidend vergrößern, bzw. die Masse des Fahrradrahmens entsprechend reduzieren lässt.

Durch die Integration von Motoreinrichtung und Energiespeichereinrichtung und der Befestigung der Energiespeichereinrichtung an der Motoreinrichtung können weiterhin die ansonsten zur elektrischen Verbindung dieser Baugruppen notwendigen Kabel und aufwändigen Steckereinrichtungen reduziert bzw. eliminiert werden, was zu weiteren Kosten-und Gewichtseinsparungen führt.

Nicht zuletzt wird auch die konstruktive Gestaltung des Fahrradrahmens wie die Montage der Antriebseinheit am Fahrradrahmen entscheidend vereinfacht dadurch, dass die Antriebseinheit einschließlich der Energiespeichereinrichtung sowie einschließlich sämtlicher Strom- und Datenverbindungen zwischen Energiespeichereinrichtung und Motoreinrichtung als im Wesentlichen einstückige Einheit gehandhabt und montiert werden kann.

Gemäß einer bevorzugten Ausführungsform ist vorgesehen, dass die Energiespeichereinrichtung in dem betriebsbereit in den Fahrradrahmen eingebauten Zustand der Antriebseinheit unmittelbar befestigt ist ausschließlich an einem Gehäuse der Motoreinrichtung oder in einem gemeinsamen Gehäuse von Motoreinrichtung und Energiespeichereinrichtung.

Dies bedeutet, dass die Energiespeichereinrichtung nicht nur in einem Zustand, in dem die Antriebseinheit von dem Fahrradrahmen getrennt und noch nicht dem Fahrradrahmen montiert ist, sondern auch in dem betriebsbereit in den Fahrradrahmen eingebauten Zustand eine unmittelbare Befestigung ausschließlich an einem Gehäuse der Motoreinrichtung oder in einem gemeinsamen Gehäuse von Motoreinrichtung und Energiespeichereinrichtung aufweist, und demzufolge mit dem Fahrradrahmen nicht unmittelbar verbunden ist.

Auch diese Ausführungsform bringt insbesondere eine reproduzierbar und dauerhaft sichere Fixierung der Energiespeichereinrichtung mit sich, da diese Fixierung der Energiespeichereinrichtung nicht auf Rast- oder Führungselemente angewiesen ist, die lediglich bzw. unmittelbar am oder im Fahrradrahmen angeordnet und befestigt sind.

Weiterhin wird die Handhabung bzw. die Entnahme und das Wiedereinsetzen der Energiespeichereinrichtung erleichtert und die Zuverlässigkeit dieser Handhabungsvorgänge erhöht.

Auch reduziert diese Gestaltung den Aufwand bei der Konstruktion und Herstellung des Fahrradrahmens, da die beim Stand der Technik üblichen, aufwändigen zusätzlichen Befestigungseinrichtungen für die Batterie am Fahrradrahen entfallen. Damit erhält der Hersteller des Fahrradrahmens hinsichtlich der Aufnahme der Energiespeichereinrichtung in den Fahrradrahmen größere Gestaltungsfreiheit bei gleichzeitig reduzierten Toleranzanforderungen in diesen Bereichen des Fahrradrahmens.

Nach einer weiteren bevorzugten Ausführungsform ist die Energiespeichereinrichtung zumindest teilweise von einem Gehäuse der Motoreinrichtung oder von einem gemeinsamen Gehäuse von Motoreinrichtung und Energiespeichereinrichtung umschlossen bzw. umschließbar. Bei dem Gehäuse muss es sich dabei nicht um ein in allen Bereichen geschlossenes Gehäuse handeln, insbesondere nicht in denjenigen Bereichen des Gehäuses, welche zur Umschließung bzw. Aufnahme der Energiespeichereinrichtung vorgesehen sind. Vielmehr können zumindest letztere Gehäusebereiche auch im wesentlichen skelettartig die Energiespeichereinrichtung nur bereichsweise umschließend ausgebildet sein. Auf diese Weise wird Gewicht gespart, und die Zugänglichkeit der Energiespeichereinrichtung wird verbessert, insbesondere zum Zweck des Batteriewechsels und/oder zum Aufladen.

Ferner kann die Energiespeichereinrichtung zusammen mit der Motoreinrichtung auch in Form einer vollintegrierten Bauweise in einem gemeinsamen Gehäuse angeordnet bzw. anordenbar sein. Bei dieser Ausführungsform lassen sich Masse und Kosten durch nicht benötigte Verbindungs- und separate Gehäuseelemente einsparen. Ein etwa erforderlicher Austausch der Energiespeichereinrichtung erfolgt bei dieser Ausführungsform vorzugsweise durch Fachpersonal nach entsprechender Öffnung des gemeinsamen Gehäuses von Motoreinrichtung und Energiespeichereinrichtung.

Nach einer bevorzugten Ausführungsform ist die Energiespeichereinrichtung in einem betriebsbereit in den Fahrradrahmen eingebauten Zustand der der Antriebseinheit zu einem wesentlichen Teil außerhalb eines Unterrohrs des Fahrradrahmens anordenbar bzw. angeordnet. Zu einem wesentlichen Teil soll im Sinne der vorliegenden Offenbarung bedeuten, dass im betriebsbereit in das Fahrrad eingebauten Zustand der Antriebseinheit vorzugsweise zumindest ein einem Viertel der Masse der Energiespeichereinrichtung entsprechender Teil der Energiespeichereinrichtung außerhalb des Unterrohrs angeordnet ist. Ebenfalls vorzugsweise befindet sich die Energiespeichereinrichtung in einer dem betriebsbereit in den Fahrradrahmen eingebauten Zustand entsprechenden Lage der Antriebseinheit zumindest teilweise unterhalb der Drehachse der Tretlagerwelle.

Diese Gestaltung kommt dem gewünschten niedrigen Schwerpunkt des Fahrrads entgegen, und erleichtert sowohl die konstruktive Integration der Antriebseinheit in den Fahrradrahmen, als auch die Handhabung der Energiespeichereinrichtung bei der Entnahme und beim Wiedereinsetzen.

Im Hinblick auf die gewünschte möglichst niedrige Schwerpunktlage ist bevorzugt vorgesehen, dass der Massenschwerpunkt der Antriebseinheit, also ein gemeinsamer Massenschwerpunkt von Motoreinrichtung ggf. mit Getriebe, Tretlagerbaugruppe und Energiespeichereinrichtung, innerhalb des in der Beschreibungseinleitung definierten Tretlagerbereichs liegt.

Dabei befindet sich sich der Massenschwerpunkt der Antriebseinheit in einer Fahrrad-Seitenansicht und in einer dem montierten Zustand der Antriebseinheit an dem Fahrradrahmen entsprechenden Lage der Antriebseinheit innerhalb eines Umkreises mit dem Radius 175 mm, bevorzugt innerhalb eines Umkreises mit dem Radius 125 mm, und besonders bevorzugt innerhalb eines Umkreises mit dem Radius 100 mm um die Drehachse der Tretlagerwelle.

Auf diese Weise wird ein niedriger Massenschwerpunkt des Fahrrads erreicht, der, wie eingangs beschrieben, vorteilhaft für das Fahrverhalten ist. Gleichzeitig lässt sich so auch gewährleisten, dass der Massenschwerpunkt des Fahrrades fahrtrichtungsbezogen möglichst weit nach hinten verlagert ist, was ebenfalls dem Fahrverhalten und Handling des Fahrrads entgegenkommt.

Nach einer bevorzugten Ausführungsform der Antriebseinheit befindet sich der Massenschwerpunkt der Antriebseinheit in einer Seitenansicht von rechts und bezogen auf die Drehachse der Tretlagerwelle innerhalb eines rechts oben liegenden Tretlager-Quadranten mit der Seitenlänge von 175 mm, bevorzugt innerhalb eines entsprechenden Tretlager-Quadranten mit der Seitenlänge 125 mm, und besonders bevorzugt innerhalb eines Tretlager-Quadranten mit der Seitenlänge 100 mm.

Ebenfalls bevorzugt befindet sich der Antriebseinheits-Massenschwerpunkt, bezogen auf die Drehachse der Tretlagerwelle, in einer Höhe von 50 mm, bevorzugt von 30 mm, besonders bevorzugt von 20 mm oberhalb der Drehachse der Tretlagerwelle.

Mit dieser Lage des Schwerpunkts der Antriebseinheit lassen sich die in der Beschreibungseinleitung ausführlich dargestellten Nachteile bekannter E-Mountainbikes, insbesondere bezüglich Handling und Fahrsicherheit, maßgeblich verbessern.

Eine weitere bevorzugte Ausführungsform der Antriebseinheit umfasst eine ausschließlich an dem Gehäuse der Motoreinrichtung oder an dem gemeinsamen Gehäuse der Antriebseinheit befestigtes Antriebsschutzschild, wobei die Antriebsschutzschild-Klappe gleichzeitig eine bewegliche Verschlussklappe zur Abdeckung und/oder Halterung der Energiespeichereinrichtung bildet.

Dies ist vorteilhaft, insbesondere da sich hiermit die erheblichen Kräfte, die beispielsweise bei einem Aufsetzen des Fahrrads im Tretlagerbereich auf ein Hindernis auftreten können, direkt von der Antriebsschutzschild-Klappe auf die Antriebseinheit, und von dieser ggf. in den Fahrradrahmen eingeleitet werden können.

Der Fahrradrahmen wird zudem weiter maßgeblich entlastet in den häufigen Fällen, in denen der Fahrer beim Aufsetzen des Fahrrads im Tretlagerbereich auf ein Hindernis in den Pedalen steht. Dank der Befestigung der Antriebsschutzschild-Klappe ausschließlich an der Antriebseinheit (und nicht etwa am Fahrradrahmen) können die Stoßkräfte direkt in die Tretlagerwelle der Antriebseinheit und von dort in die dämpfenden und abfedernden Beine des Fahrers eingeleitet werden, ohne den Rahmen nennenswert zu belasten.

Beim Stand der Technik hingegen sind Antriebsschutzschilde üblicherweise nicht mit dem Antriebsgehäuse, sondern direkt mit dem Fahrradrahmen verbunden. Aus diesem Grund besteht beim Stand der Technik ein erhebliches Risiko, den Fahrradrahmen, beispielsweise beim Aufsetzen auf Hindernisse, zu überlasten und damit zu beschädigen.

Nach einer besonders bevorzugten Ausführungsform umfasst die Antriebseinheit genau zwei Rahmenschnittstellenanordnungen, nämlich eine vordere und eine hintere Rahmenschnittstellenanordnung. Die beiden Rahmenschnittstellenanordnungen der Antriebseinheit definieren dabei eine (gedachte) hintere Befestigungsachse und eine vordere Abstützungsachsanordnung mit einer (gedachten, ggf. imaginären) vorderen Befestigungsachse.

Die vordere Abstützungsachsanordnung kann eine oder mehrere Befestigungsachsen umfassen. Falls die vordere Abstützungsachsanordnung mehrere Befestigungsachsen umfasst, so definiert deren gemeinsame Schwerachse die Lage der in diesem Fall imaginären vorderen Befestigungsachse.

Nachfolgend werden einige besonders bevorzugte Positionen der Schnittstellen zwischen der Antriebseinheit und dem Fahrradrahmen, besondere die bevorzugten Lagen und Positionen von Rahmenschnittstellen-anordnungen und Antriebseinheitsschnittstellen-Anordnungen, bzw. von Befestigungsachsen zwischen Antriebseinheit und Fahrradrahmen, angegeben.

Bevorzugt liegen die Rahmenschnittstellen der Antriebseinheit und damit die vorderen und hinteren Befestigungsachsen als Schnittstellen zwischen Antriebseinheit und Fahrradrahmen in einem vertikalen Bereich oberhalb einer gedachten Horizontalebene, welche die Drehachse der Tretlagerwelle enthält, sowie unterhalb einer Horizontalebene, welche den Angriffspunkt der Kettenzugkraft am Kettenrad enthält.

Zur Minimierung von durch die Kettenzugkraft, die ohne weiteres eine Größenordnung von 5000 N erreichen kann, erzeugten Drehmomenten und entsprechenden Belastungen bzw. Verformungen von Antriebseinheit oder Fahrradrahmen ist dabei der vertikale Abstand zwischen der hinteren Befestigungsachse und dem Angriffspunkt der Kettenzugkraft möglichst klein, vorzugsweise kleiner als 30 mm, besonders bevorzugt kleiner als 20 mm.

Ebenfalls bevorzugt liegen in dem betriebsbereit in den Fahrradrahmen eingebauten Zustand der Antriebseinheit die beiden Befestigungsachsen weiter vorn als eine gedachte Vertikalebene, welche die Drehachse der Tretlagerwelle SB enthält, besonders bevorzugt mehr als 20 mm weiter vorn als die gedachte Vertikalebene. Hierdurch wird für den Fahrradhersteller wertvoller Bauraum im Bereich direkt hinter der Tretlagerwelle bereitgestellt, welcher von Bedeutung für die Hinterradkinematik von gefederten Fahrrädern und für die wünschenswert möglichst geringe Kettenstrebenlänge ist.

Die beiden Befestigungsachsen liegen dabei vorzugsweise vor einer gedachten schrägen Ebene, welche die Drehachse der Tretlagerwelle enthält, wobei die schräge Ebene relativ zu einer die Drehachse der Tretlagerwelle enthaltenden Horizontalebene um einen Winkel β von 50° nach vorne gekippt ist, mit anderen Worten im Uhrzeigersinn gekippt, bezogen auf eine Ansicht von rechts auf ein Fahrrad.

Ebenfalls bevorzugt liegen, von rechts betrachtet, die beiden Befestigungsachsen innerhalb eines im rechts oben liegenden Tretlager-Quadranten lokalisierten Winkels α von 30° bis 80°, besonders bevorzugt innerhalb eines Winkels α von 50° bis 60°, wobei der Scheitel des Winkels mit der Drehachse der Tretlagerwelle zusammenfällt.

Eine solche Positionierung der beiden Befestigungsachsen wird erst durch das Zusammenwirken einer Mehrzahl von besonderen Merkmalen der Antriebseinheit nach der vorliegenden Offenbarung möglich, darunter insbesondere die Zuordnung nahezu aller Kräfte, Momente und Toleranzen zur hinteren Rahmenschnittstelle und die damit erreichten kurzen Toleranzketten und Kraftübertragungswege sowie hohen Steifigkeiten der Antriebseinheit, die wiederum den Verzicht auf die im Stand der Technik übliche dritte Befestigungsachse weit hinter und teilweise sogar unterhalb der Tretlagerwelle ermöglicht.

Mit einer derartigen Positionierung der der beiden Befestigungsachsen als Schnittstellen zwischen Antriebseinheit und Fahrradrahmen lassen sich gegenüber dem Stand der Technik zahlreiche Vorteile erzielen.

Zunächst steht hierdurch wesentlich mehr Bauraum für Baugruppen der Hinterbaufederung wie Schwingenlager und Dämpferanlenkung zur Verfügung, da der Fahrradrahmen nicht mehr, wie beim Stand der Technik verhältnismäßig weit bis hinter das Tretlager und dabei teilweise sogar bis unterhalb der Tretlagerhöhe reichen muss, um die elektrische Antriebseinheit dort abzustützen. Hierdurch verringern sich auch Komplexität, Gewicht und Kosten, und der Rahmenhersteller erhält wesentlich mehr Gestaltungsfreiheit in dem funktional sehr wichtigen Bereich direkt hinter dem Tretlager.

Weiterhin verbessern sich gegenüber dem Stand der Technik, bei dem der Rahmen die Antriebseinheit zumindest im Verbindungsbereich mit der Antriebseinheit oftmals zu einem großen Teil umschließt, besteht mit den vorstehend beschriebenen Bauweisen auch die Möglichkeiten zur Kühlung der elektrischen und elektronischen Komponenten der Antriebseinheit. Dies spielt eine zunehmende Rolle bei den aktuell immer weiter abnehmenden Baugrößen dieser Komponenten bei gleichzeitig tendenziell steigenden Motorleistungen.

Bezüglich der seitlichen Positionierung der Rahmenschnittstellen an der Antriebseinheit ist bevorzugt vorgesehen, dass vorzugsweise parallel zu einer Fahrrad-Längsebene verlaufende Schnittstellenebenen zwischen den hinteren Rahmenschnittstellen der Antriebseinheit und den zugehörigen rahmenseitig hinteren Antriebseinheits-Schnittstellen im Hinblick auf optimale Momenten- und Kraftübertragung von der Antriebseinheit auf den Fahrradrahmen, und im Hinblick auf hohe Steifigkeit der Antriebseinheit, links und rechts jeweils outboardseitig außerhalb des Fahrradrahmen positioniert sind, wodurch sich eine entsprechend vorteilhaft große Abstützbreite zwischen dem Fahrradrahmen und dem Gehäuse der Antriebseinheit ergibt.

In diesem Zusammenhang kann als Quotient aus dieser Gehäuse-Abstützbreite WS der Antriebseinheit und der Länge (LSB) der Tretlagerwelle (SB) ein Abstützungsfaktor gebildet werden. Der Abstützungsfaktor ist bei der Antriebseinheit gemäß der vorliegenden Offenbarung größer als 0.5, bevorzugt größer als 0.55 und besonders bevorzugt größer als 0.58.

Als kennzeichnende Größe eines Fahrrad-Antriebsstrangs ist in Fachkreisen auch der sog. Q-Faktor bekannt, welcher den Abstand QF zwischen den Außenseiten der beiden Fahrradkurbeln im Bereich der Pedalgewinde in Millimeter bezeichnet. Auch diesbezüglich ist es in Bezug auf die Steifigkeit des Antriebs und Minimierung der Belastung sowohl der Antriebseinheit als auch des Fahrradrahmens wünschenswert, einen möglichst großen Wert für einen Quotienten aus der Gehäuse-Abstützbreite WS der Antriebseinheit und dem Q-Faktor einer mit Fahrradkurbeln komplettierten Antriebseinheit zu erhalten. Die Antriebseinheit gemäß der vorliegenden Offenbarung erzielt aufgrund ihrer großen Gehäuse-Abstützbreite diesbezüglich ohne weiteres Werte für einen solchen Quotienten, welche bei 0.45 oder darüber liegen.

Alternativ bzw. zusätzlich zu den bevorzugten Werten des Abstützungsfaktors wird die Abstützbreite so gewählt, dass ein als Quotient aus der Abstützbreite und einem Kettenzug-Horizontalabstand zwischen dem Angriffspunkt der Kettenzugkraft am Kettenrad und der rechtsseitigen Schnittstellenebene gebildeter Kettenzugfaktor größer ist als 5, bevorzugt größer als 5.2 und besonders bevorzugt größer als 5.3.

Auf diese Weise wird eine optimale Übertragung der auf die Antriebseinheit wirkenden Querkräfte, insbesondere der Pedalkräfte, und ebenso der Kettenzugkräfte, auf kürzestem Weg in den Fahrradrahmen gewährleistet. Auch erhalten hierdurch die an dieser Kraftübertragung beteiligten Strukturen der Antriebseinheit und des Fahrradrahmens bei geringem Gewicht eine besonders hohe Steifigkeit, was unerwünschten Verwindungen und damit verbundenen Kraftverlusten im Betrieb der Antriebseinheit entgegenwirkt.

Bei Antriebseinheiten aus dem Stand der Technik liegen Werte für den Abstützungsfaktor hingegen zumeist deutlich unter 0.4, und Werte für den Kettenzugfaktor zumeist deutlich unter 3.

Die Werte für den Abstützungsfaktor bzw. für den Kettenzugfaktor werden insbesondere dadurch möglich, dass die Antriebseinheit gemäß der vorliegenden Offenbarung den Fahrradrahmen im Tretlagerbereich, bzw. die dort angeordnete Rahmenschnittstellen-Einheit, von außen außen umgreift. Beim Stand der Technik ist es zumeist umgekehrt, mit anderen Worten, der (für sich genommen im Tretlagerbereich oftmals schon relativ schmale) Fahrradrahmen umgreift die Antriebseinheit, zumindest in den Bereichen der Rahmenschnittstellen bzw. Befestigungsachsen der Antriebseinheit. Hierdurch fallen insbesondere die Abstützbreiten beim Stand der Technik erheblich schmäler aus, als diese gemäß der vorliegenden Offenbarung erzielt werden.

Damit ergeben sich beim Stand der Technik hohe Biegemomente durch die Wirkung der Pedalkräfte und der Kettenzugkräfte, die entweder zu entsprechend großen Verformungen der Antriebseinheit bzw. des Fahrradrahmens im Tretlagerbereich führen, oder die mit großen Wandstärken in diesen Bereichen aufgefangen und kompensiert werden müssen, was zu entsprechend hohen Gewichten von Antriebseinheit und/oder Rahmen führt.

Weiterhin sind über die hintere Rahmenschnittstellenanordnung vorzugsweise sämtliche Bewegungsfreiheitsgrade der Antriebseinheit gegenüber dem Fahrradrahmen bzw. gegenüber einer Rahmenschnittstellen-Einheit festgelegt bzw. festlegbar, außer einem Rotationsfreiheitsgrad um eine zur Drehachse der Tretlagerwelle parallele Rotationsachse.

Im Sinne der vorliegenden Offenbarung bedeutet dies, dass über die hintere Rahmenschnittstellenanordnung sämtliche Kräfte und Drehmomente zwischen der Antriebseinheit und dem Fahrradrahmen bzw. der Rahmenschnittstellen-Einheit übertragbar sind, mit der Ausnahme von Drehmomenten, die um die Drehachse bzw. Befestigungsachse der hinteren Rahmenschnittstellenanordnung wirken.

Der verbleibende Rotationsfreiheitsgrad gegenüber dem Fahrradrahmen bzw. gegenüber der Rahmenschnittstellen-Einheit ist dabei mittels der vorderen Rahmenschnittstellenanordnung festgelegt bzw. festlegbar. Dabei erfolgt diese Festlegung bevorzugt mittels einer Reibungsverbindung zwischen der vorderen Rahmenschnittstellenanordnung der Antriebseinheit und einer entsprechenden vorderen Antriebseinheitsschnittstellen-Anordnung des Fahrradrahmens. Die Reibungsverbindung hat insbesondere den Vorteil, besonders geringe Anforderungen an die Genauigkeit und die Toleranzen des Fahrradrahmens im Bereich der vorderen Antriebseinheitsschnittstellen-Anordnung zu stellen, was die Kosten für die Fertigung des Fahrradrahmens sowie den Aufwand bei der Montage der Einheit verringert.

Vorzugsweise umfasst die die hintere Rahmenschnittstellenanordnung der Antriebseinheit einen Rahmen-Ausgleichsadapter zum Ausgleich von Breitentoleranzen des Fahrradrahmens bzw. der Rahmenschnittstellen-Einheit. Der Rahmen-Ausgleichsadapter umfasst zur radialen Fixierung (bezogen auf die hintere Befestigungsachse) der hinteren Rahmenschnittstellenanordnung relativ zum Fahrradrahmen bzw. relativ zur Rahmenschnittstellen-Einheit, sowie zum stufenlos spielfrei einstellbaren Axial-Toleranzausgleich (bezogen auf die hintere Befestigungsachse) zwischen hinterer Rahmenschnittstellenanordnung und Fahrradrahmen bzw. Rahmenschnittstellen-Einheit eine in eine Aufnahmebohrung des Antriebsgehäuses axial verschiebbar aufnehmbare Radialklemmeinrichtung.

Dieser Toleranzausgleich ist von erheblicher Bedeutung, da die Antriebseinheit in der Praxis des Fahrradmarkts mit verschiedensten Fahrradrahmen bzw. mit ggf. unterschiedlichsten Rahmenschnittstellen-Einheiten kombiniert werden kann, wobei die Fahrradrahmen, oder ggf. die Rahmenschnittstellen-Einheiten, von verschiedensten Herstellern stammen bzw. zugeliefert sein können, und zudem aus den unterschiedlichsten Materialien wie beispielsweise Stahl, Leichtmetall oder Faserverbundwerkstoff bestehen können.

Hierdurch ergeben sich erfahrungsgemäß, je nach Ursprung bzw. Hersteller des Fahrradrahmens oder der Rahmenschnittstellen-Einheit, unterschiedlichste Toleranzsituationen in Bezug auf die Abstützbreite am Fahrradrahmen bzw. an der Rahmenschnittstellen-Einheit. Derartige unterschiedliche Toleranzsituationen lassen sich mit dem Ausgleichsadapter gemäß der vorliegenden Offenbarung einfach und insbesondere stufenlos kompensieren.

Weiterhin bevorzugt umfasst die Antriebseinheit ein in einem Raumbereich zwischen Motoreinrichtung und Energiespeichereinrichtung angeordnetes, hermetisch geschlossenes Controllergehäuse zur Aufnahme einer Controllereinrichtung für die Steuerung von Motoreinrichtung und/oder Energiespeichereinrichtung. Das Controllergehäuse kann auch einstückig mit einem Teil des Motorgehäuses ausgebildet sein.

Das Controllergehäuse kann eine für sich genommen im Stand der Technik bekannte Steckereinrichtung zur Verbindung von Controllereinrichtung und Energiespeichereinrichtung aufweisen. Besonders bevorzugte Ausführungen der Steckeinrichtung sind weiter unten beschrieben und in den Figuren dargestellt.

Besonders bevorzugt umfasst das Controllergehäuse eine Stromschnittstelle für die Verbindung von Controllereinrichtung und Energiespeichereinrichtung, bei der die Schnittstellenflächen, also die zur gegenseitigen, stromübertragenden Berührung vorgesehenen Kontaktoberflächen der batterieseitigen und controllerseitigen Stecker, parallel zu der Entnahmerichtung der Energiespeichereinrichtung angeordnet sind.

Aufgrund dieser Anordnung wird die Stromschnittstelle bei einer Entnahme der Energiespeichereinrichtung aus der Antriebseinheit, welche entlang der koaxial zu einer Längsachse des Unterrohrs verlaufenden und damit linearen Entnahmerichtung erfolgt, automatisch und ohne weitere Handgriffe getrennt, und beim Einsetzen der Energiespeichereinrichtung ebenso automatisch wieder hergestellt. Dies erleichtert entscheidend die Handhabung der Energiespeichereinrichtung sowohl bei der Montage als auch im alltäglichen Betrieb des Fahrrades. Ferner können hierdurch vereinfachte Steckereinrichtungen verwendet und freiliegende Kabellängen eingespart werden, was ebenfalls zu Kostenreduktionen und zur Verbesserung der Zuverlässigkeit der Antriebseinheit beiträgt

Um genügenden Bauraum für möglichst große Energiespeichereinrichtung bereitzustellen, wird für die Antriebseinheit vorzugsweise eine Motoreinrichtung mit kompakter Bauart eingesetzt. Besonders vorteilhaft sind diesbezüglich sog. konzentrische bzw. koaxiale Antriebseinheiten, bei denen die Motoreinrichtung und das zumeist benötigte Untersetzungsgetriebe, bzw. deren jeweilige Abtriebswellen, koaxial zur Tretlagerwelle bzw. konzentrisch zur Tretlagerwelle angeordnet sind.

Alternativ kann die Motoreinrichtung der Antriebseinheit auch eine Abtriebswelle aufweisen, welche achsparallel, jedoch versetzt zur Tretlagerwelle angeordnet ist. Motoreinrichtungen mit achsparallel zur Tretlagerwelle ausgerichteten Abtriebswellen sind weit verbreitet und kostengünstig. In diesem Fall ist es vorteilhaft, die Motoreinrichtung so anzuordnen, dass der für die Energiespeichereinrichtung vorgesehene Bauraum nicht mit dem für die Motoreinrichtung vorgesehenen Bauraum der Antriebseinheit überlappt.

Hierzu wird die Motoreinrichtung vorzugsweise so angeordnet, dass sich der Bereich maximaler radialer Ausdehnung der Motoreinrichtung vertikal oberhalb der Tretlagerbaugruppe bzw. Tretlagerwelle, und damit außerhalb des gemäß der vorliegenden Offenbarung bevorzugten Bauraumbereichs für die Energiespeichereinrichtung angeordnet ist. Bei derartiger im Wesentlichen vertikaler Ausrichtung der Motoreinrichtung kann sich das Gehäuse der Motoreinrichtung teilweise in einen Bereich erstrecken, in dem bei gefederten Fahrradrahmen üblicherweise ein Hauptdrehlager für die Hinterbaufederung angeordnet ist. Damit eignet sich diese Ausführungsform vor allem für Fahrräder mit ungefederten Hinterbau, sog. Hardtail-Fahrräder, oder für Fahrräder mit gefedertem Hinterbau, bei dem das Hauptdrehlager der Hinterbaufederung nicht in dem oben genannten Bereich liegt.

Gemäß einer weiteren bevorzugten Ausführungsform ist vorgesehen, dass das Gehäuse der Motoreinrichtung oder das gemeinsame Gehäuse von Motoreinrichtung und Energiespeichereinrichtung gleichzeitig eine Schnittstelle bzw. Lageraufnahme für ein Hauptdrehlager bzw. für eine Schwinge der Hinterbaufederung eines gefederten Hinterbaurahmens aufweist bzw. bildet.

Hierdurch ergibt sich vorteilhaft eine weitere Funktionsintegration bei gleichzeitiger Gewichtsreduktion und Einsparung von Bauraum und Kosten. Zudem wird auf diese Weise die wünschenswert hohe Torsions- und Seitensteifigkeit der Hinterbaufederung sowie des gesamten Fahrradrahmens verbessert.

Nach einer weiteren bevorzugten Ausführungsform enthält die Energiespeichereinrichtung im Wesentlichen prismatisch geformte Energiespeicherzellen, wobei die Definition von "prismatisch" insbesondere auch zylindrische Formen umfasst. Die Energiespeicherzellen sind dabei so angeordnet, dass die Längsachsen eines überwiegenden Teils der Energiespeicherzellen im Wesentlichen achsparallel zur Tretlagerwelle verlaufen. Falls nicht alle Energiespeicherzellen achsparallel zur Tretlagerwelle angeordnet sind, ist vorgesehen, dass die Längsachsen der restlichen Energiespeicherzellen im Wesentlichen parallel zu einer zur Tretlagerwelle rechtwinkligen Richtung verlaufen.

Bei gemischt achsparallel und rechtwinklig zur Tretlagerwelle ausgerichteten Energiespeicherzellen beläuft sich das Verhältnis der Zahl an achsparallel zur Tretlagerwelle angeordneten Energiespeicherzellen zu der Zahl an rechtwinklig zur Tretlagerwelle angeordneten Energiespeicherzellen auf einen Wert zwischen 3 bis 5 zu 1.

Mit einer solchen überwiegend oder gänzlich zur Tretlagerwelle parallelen Lage der Energiespeicherzellen wird eine Zellpackungskonfiguration erreicht, die eine sowohl flexible als auch optimale Ausnutzung des im Tretlagerbereich verfügbaren Volumens erlaubt.

Die Ausrichtung der Polarität der Energiespeicherzellen kann dabei nach Bedarf gewählt werden, indem die positiven bzw. negativen Polseiten der Energiespeicherzellen vorzugsweise abwechselnd nach links/rechts bzw. vorne/hinten bzw. oben/unten zeigen.

Die vorliegende Offenbarung betrifft ferner einen Fahrradrahmen bzw. eine Rahmenschnittstellen-Einheit. Eine Rahmenschnittstellen-Einheit kann beispielsweise eine vorzugsweise einstückige Anordnung aus Formelementen, Rohren und Muffen sein, welche einerseits Schnittstellen zur Verbindung mit der Antriebseinheit und andererseits Schrägstellen zur Verbindung mit dem Fahrradrahmen, insbesondere mit dem Unterrohr und mit dem Sattelrohr des Fahrradrahmens aufweist.

Der Fahrradrahmen bzw. die Rahmenschnittstellen-Einheit weist eine hintere Antriebseinheitsschnittstellen-Anordnung sowie eine vordere Antriebseinheitsschnittstellen-Anordnung zur Verbindung mit einer Antriebseinheit auf wie vorstehend beschrieben.

Der Fahrradrahmen, bzw. die Rahmenschnittstellen-Einheit, besitzt dementsprechend genau zwei Antriebseinheitsschnittstellen-Anordnungen, nämlich eine hintere Antriebseinheitsschnittstellen-Anordnung und eine vordere Antriebseinheitsschnittstellen-Anordnung, welche eine (gedachte) vordere und eine (gedachte) hintere Befestigungsachse zur Befestigung der Antriebseinheit definieren.

Über die hintere Antriebseinheitsschnittstellen-Anordnung lassen sich sämtliche Bewegungsfreiheitsgrade der Antriebseinheit gegenüber dem Fahrradrahmen bzw. gegenüber der Rahmenschnittstellen-Einheit festlegen, außer einem verbleibenden Freiheitsgrad der Rotation um die hintere Befestigungsachse. Dementsprechend ist die vordere Rahmenschnittstellenanordnung als Drehmomentstütze zur Festlegung des verbleibenden Rotationsfreiheitsgrads ausgebildet.

Dies bedeutet, dass die hintere Rahmenschnittstellenanordnung näherungsweise sämtliche Kräfte und Drehmomente von und zur Antriebseinheit überträgt, und sämtliche maßlichen und Toleranzbeziehungen zwischen Antriebseinheit und Fahrradrahmen bzw. Rahmenschnittstellen-Einheit festlegt, außer Drehmomenten um die hintere Befestigungsachse als Rotationsachse und die um die hintere Befestigungsachse einzig mögliche rotatorische Bewegung.

Dies ermöglicht, anders als beim Stand der Technik, insbesondere eine eindeutige Festlegung aller Lastpfade und eine eindeutige Zuordnung aller wesentlichen Toleranzbeziehungen zur hinteren Rahmenschnittstelle, während die vordere Rahmenschnittstelle eines Drehmomentauslegers lediglich vergleichsweise nur geringe Kräfte übertragen muss und nur sehr geringen Anforderungen hinsichtlich Genauigkeit und Toleranzen unterliegt.

Die genau zwei Befestigungsachsen des Fahrradrahmens bzw. der Rahmenschnittstellen-Einheit sind dabei vorzugsweise analog zur Anordnung der Befestigungsachsen bei der Antriebseinheit angeordnet wie obenstehend hinsichtlich der Antriebseinheit im Detail ausgeführt. Ebenso vorzugsweise liegen Abstützungsfaktor und Kettenzugfaktor des Fahrradrahmens bzw. der Rahmenschnittstellen-Einheit in gleichen Grö-ßen vor wie weiter oben bei der Antriebseinheit hergeleitet.

Vorzugsweise umfasst der Fahrradrahmen bzw. die Rahmenschnittstellen-Einheit Lageraufnahmen für eine Schwinge eines gefederten Hinterbaurahmens. Insbesondere im Fall der Rahmenschnittstellen-Einheit ermöglicht dies eine besonders kompakte und gewichtsreduzierte Ausbildung eines gefederten Hinterbaurahmens bei gleichzeitig reduziertem Kostenaufwand gegenüber dem Stand der Technik.

Die vorliegende Offenbarung betrifft ferner eine Slide-In-Energiespeichereinrichtung für eine Antriebseinheit wie vorstehend beschrieben. Die Energiespeichereinrichtung weist besonders bevorzugt diejenigen Merkmale auf, die bereits weiter oben bei der Beschreibung der bevorzugten Merkmale der Antriebseinheit genannt sind, und die in der nachfolgenden Figurenbeschreibung ausführlich beschrieben werden.

Nachstehend werden bevorzugte Ausführungsformen des Gegenstands der vorliegenden Offenbarung anhand der Figuren beispielhaft beschrieben.

Es zeigt:
- Fig. 1:: ein E-Mountainbike nach dem Stand der Technik in einer antriebsseitigen Seitenansicht;
- Fig. 2:: einen schematischen Umriss eines E-Mountainbikes mit einem darin eingebauten Ausführungsbeispiel einer Antriebseinheit mit integrierter Slide-In-Energiespeichereinrichtung;
- Fig. 3:: die Antriebseinheit gemäß Fig. 2 in einer Seitenansicht von der Antriebsseite;
- Fig. 4:: die Antriebseinheit gemäß Fig. 2 und 18 in einer Seitenansicht von der Nicht-Antriebsseite;
- Fig. 5:: die Antriebseinheit gemäß Fig. 2 bis 19 in einer hinteren Schrägansicht von der Antriebsseite;
- Fig. 6:: die Antriebseinheit gemäß Fig. 2 bis 20 in einer vorderen Schrägansicht von der Antriebsseite;
- Fig. 7:: die Antriebseinheit gemäß Fig. 2 bis 21 in einer perspektivischen Explosionsdarstellung von der Nicht-Antriebsseite;
- Fig. 8:: die Antriebseinheit gemäß Fig. 2 bis 22 in einer Querschnittsdarstellung sowie den zugehörigen Schnittverlauf;
- Fig. 9:: die Antriebseinheit gemäß Fig. 2 bis 23 in Querschnittsdarstellung gemäß Fig. 23 mit zur Batterieentnahme geöffnetem Antriebsschutzschild, sowie den zugehörigen Schnittverlauf;
- Fig. 10:: die Antriebseinheit gemäß Fig. 2 bis 24 in einer Schrägansicht von der Nicht-Antriebsseite mit geöffneter Antriebsschutzschild-Klappe bei der Batterieentnahme;
- Fig. 11:: die Antriebseinheit gemäß Fig. 2 bis 25 in einer Längsschnittdarstellung durch die beiden Rahmenschnittstellen, sowie den zugehörigen Schnittverlauf;
- Fig. 12:: die Antriebseinheit gemäß Fig. 2 bis 26 in einer Längsschnittdarstellung durch Antriebsschutzschild-Lagerung, Tretlagerwelle und hintere Rahmenschnittstellenanordnung sowie den zugehörigen Schnittverlauf;
- Fig. 13:: ein Motor-/Getriebegehäuse sowie einen ToleranzAusgleichsadapter der Antriebseinheit gemäß Fig. 2 bis 27 in einer Explosionsdarstellung;
- Fig. 14:: die Antriebseinheit gemäß Fig. 2 bis 24 in einer perspektivischen Ansicht mit geöffneter Antriebsschutzschild-Klappe bei der Entnahme der Batterie;
- Fig. 15A-C:: einen Rahmen-Ausgleichsadapter zum Ausgleich unterschiedlicher Toleranzen zwischen Antriebseinheit und Fahrradrahmen bzw. zwischen Antriebseinheit und Rahmenschnittstellen-Einheit Antriebseinheit gemäß Fig. 2 bis 24; und
- Fig. 16:: eine die Energiespeichereinrichtung enthaltende Antriebseinheit gemäß Fig. 2 bis 24 in einer Schrägansicht.

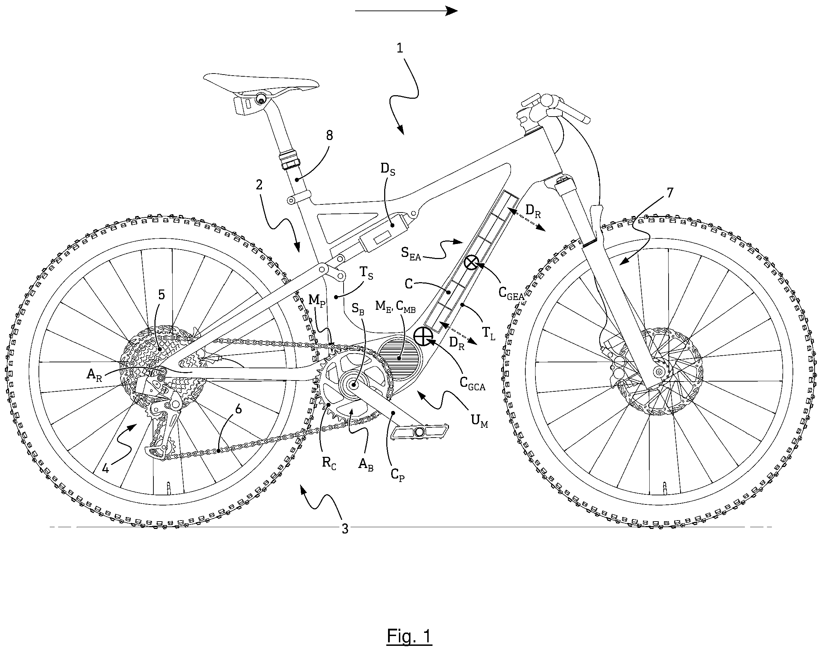

Fig. 1 zeigt ein Mountainbike mit elektrischem Zusatzantrieb gemäß dem Stand der Technik. Das Mountainbike weist einen Haupt-Fahrradrahmen 1 mit einem mittels Feder-/Dämpfereinrichtung DS gefederten Hinterbau 2 auf. Der Antriebsstrang 3 des Mountainbikes umfasst ein Kettenrad RC, ein hinteres Schaltwerk 4, eine Mehrfach-Ritzelkassette 5 sowie eine Antriebskette 6.

Weiterhin ist das Mountainbike mit einer den Fahrer unterstützenden elektrischen Motoreinheit UM ausgestattet, welche eine elektrische Motoreinrichtung ME enthält, die als Mittelmotor ausgebildet ist, also im Bereich der Tretlagerbaugruppe AB angeordnet ist, bzw. die Tretlagerbaugruppe AB enthält. Der Motoreinheit UM ist eine Energiespeichereinrichtung SEA zugeordnet. Zur Steuerung von Motor ME und/oder Energiespeichereinrichtung SEA ist der Motoreinheit UM eine Controllereinrichtung CMB zugeordnet, der beispielsweise im oder am Gehäuse der elektrischen Motoreinrichtung ME positioniert ist.

Die Energiespeichereinrichtung SEA ist im Inneren des Unterrohrs TL des Fahrradrahmens 1 angeordnet, und lässt sich, auf das Unterrohr TL bezogen im Wesentlichen radial, in Entnahmerichtung DR aus dem Unterrohr TL entnehmen, und in umgekehrter Richtung wieder einsetzen.

Hierzu ist es erforderlich, dass das Unterrohr TL einen nach vorne unten offenen, insbesondere U-förmigen Rohrquerschnitt aufweist, mit den in der Beschreibungseinleitung beschriebenen Nachteilen insbesondere hinsichtlich verringerter Steifigkeit bzw. Gewichtserhöhung des Fahrradrahmens.

Außerdem ist eine vergleichsweise aufwändige Abdichtung des Unterrohrs TL gegenüber eindringendem Schmutz bzw. Wasser, sowie eine ebenfalls aufwändige elektrische Anbindung mit Verkabelung und lösbaren Steckvorrichtungen, sowie eine mechanische Verriegelungseinrichtung für die Energiespeichereinrichtung SEA in dem Unterrohr TL erforderlich.

Die Positionierung sowohl der Motoreinheit UM als auch der Energiespeichereinrichtung SEA vor bzw. weit vor Tretlagerbaugruppe AB führt zu der in Fig. 1 eingezeichneten Schwerpunktlage CGEA der Energiespeichereinrichtung SEA zu der gemeinsamen Schwerpunktlage CGCA von Motoreinheit UM und Energiespeichereinrichtung SEA. Es wird deutlich, dass sich der Schwerpunkt des Fahrrads durch diese Baugruppen, die eine erhebliche Masse von typischerweise ca. 5 bis 8 kg aufweisen, sehr weit nach oben und nach vorne verlagert. Dies bringt die in der Beschreibungseinleitung dargestellten Nachteile insbesondere bezüglich Handling und Fahrsicherheit mit sich.

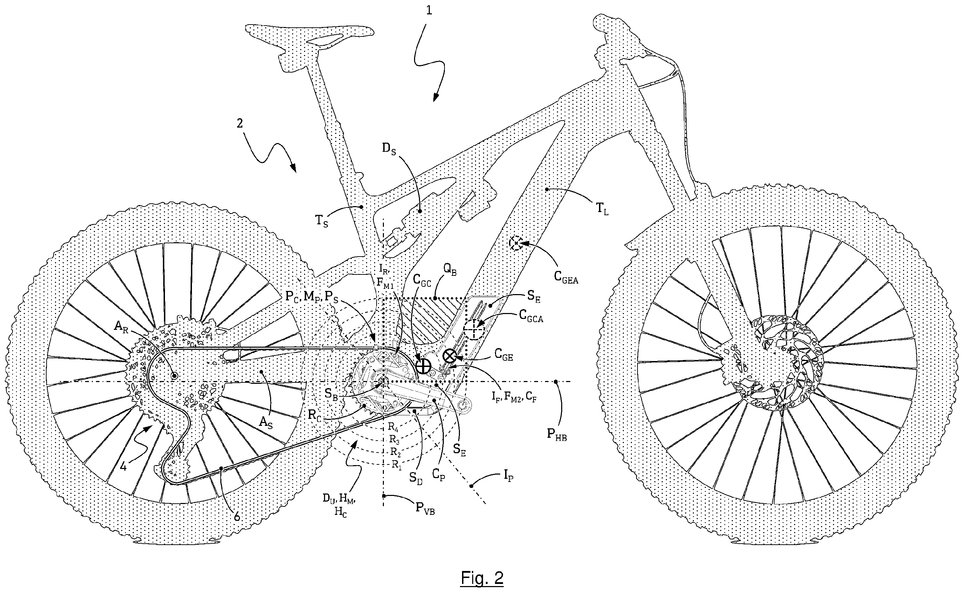

Fig. 2 zeigt in schematisierter Darstellung die wesentlichen Baugruppen und Komponenten eines E-Mountainbikes, welches mit einer Ausführungsform einer Antriebseinheit DU gemäß der vorliegenden Offenbarung ausgestattet ist.

Fig. 2 zeigt ein in ein E-Mountainbike eingebautes, bevorzugtes Ausführungsbeispiel einer Antriebseinheit DU mit integrierter Energiespeichereinrichtung SE. Die Antriebseinheit DU ist an zwei Rahmenschnittstellen in den Bereichen zweier gedachter Befestigungsachsen FM 1 und FM2 mit dem Fahrradrahmen 1 verbunden. In einigen der nachfolgenden Figuren ist die hintere Befestigungsachse FM1 zur besseren Verdeutlichung jeweils mit rautenförmigen Linienenden versehen, während die vordere Befestigungsachse jeweils FM2 kreisförmigen Linienenden versehen ist.

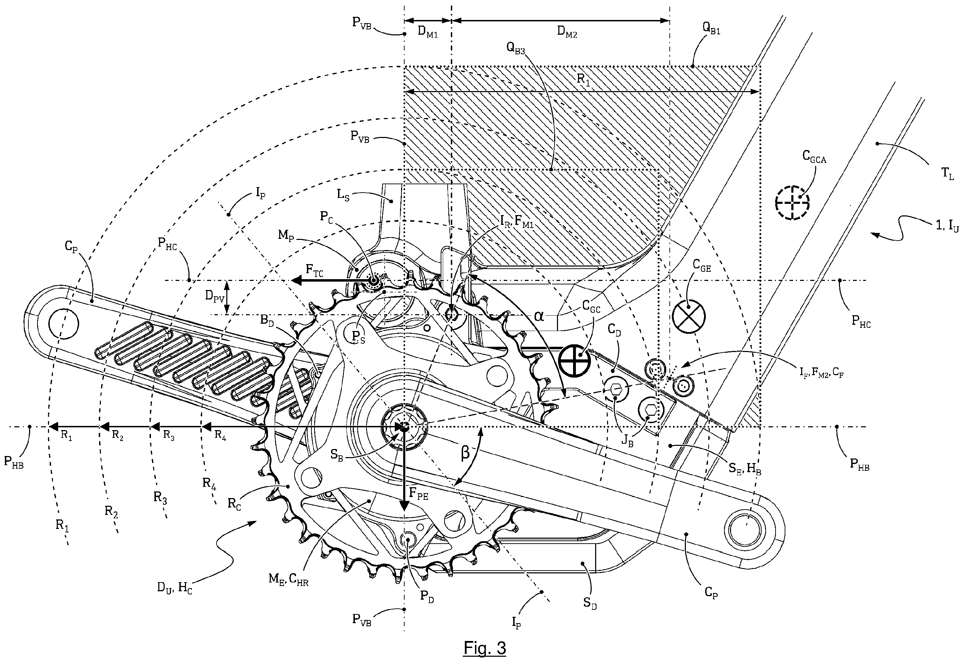

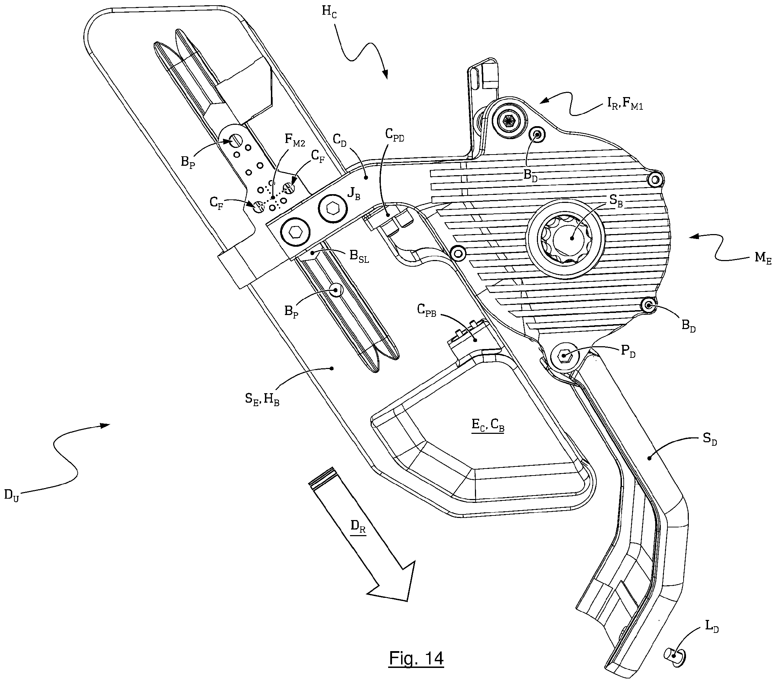

Fig. 3 bis 16 zeigen verschiedene Ansichten, Explosions- und Schnittdarstellungen der Antriebseinheit DU gemäß Fig. 2. In einigen der Fig. 3 bis 16 sind nur Teilumfänge der Antriebseinheit DU gemäß Fig. 2 gezeigt, bzw. es werden Einbausituationen der Antriebseinheit DU gemäß Fig. 2 in einem Fahrradrahmen bzw. in einer Rahmenschnittstellen-Einheit IU dargestellt.

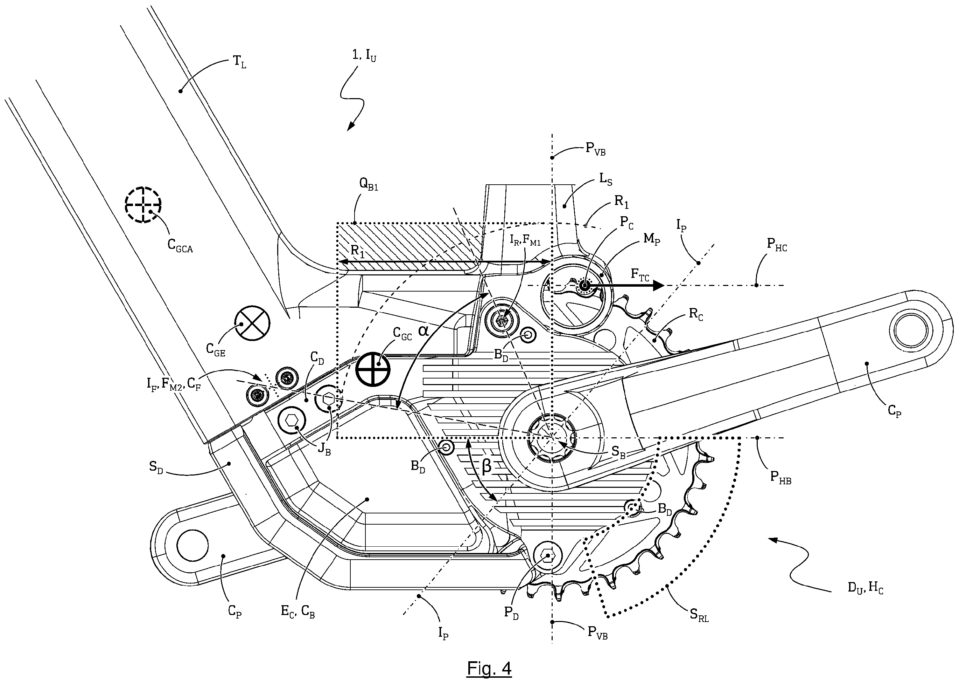

Fig. 3 zeigt den durch einen strichliertem Kreis mit dem Radius R1 = 175 mm definierten Tretlagerbereich aus Fig. 2 in einer vergrößerten Darstellung von der rechten bzw. Antriebsseite, während Fig. 4 den Tretlagerbereich gemäß Fig. 2 und 3 von der linken bzw. Nichtantriebsseite zeigt.

In Fig. 2 erkennt man zunächst einen Fahrradrahmen 1 mit einer Hinterbaufederung DS, 2 ähnlich dem in Fig. 1 dargestellten Rahmen 1.

Bereits in Fig. 2 wird erkennbar, deutlicher in Fig. 3, 4, 8, 9, 10, 14 und 16, dass mit der Antriebseinheit DU eine erhebliche Reduktion der Komplexität und damit der Masse und der Kosten insbesondere des Fahrradrahmens erreicht wird dadurch, dass die beim Stand der Technik üblichen weiteren Befestigungsachsen bzw. Aufhängungspunkte in einem hinteren Bereich der Antriebseinheit DU, insbesondere hinter einer durch die Tretlagerwelle SB verlaufenden, gedachten Vertikalebene PVB, weggelassen bzw. vor diese Vertikalebene PVB verlegt sind.

Auf diese Weise ergibt sich eine erhebliche Reduktion des beim Stand der Technik erforderlichen Bauteil- und Bauraumvolumens hinter der Vertikalebene PVB, insbesondere auch entlang der Hinterbaustrebe zwischen Tretlagerwelle SB und Hinterradachse AR gemäß Fig. 1 und 2, und damit eine höhere Gestaltungsfreiheit für die Auslegung und Geometrie gefederter Hinterbaurahmen 2 gemäß Fig. 1 und 2.

Die Antriebseinheit DU gemäß der vorliegenden Offenbarung benötigt dabei nicht nur keine Befestigungsachsen bzw. Aufhängungspunkte in dem Bauraum hinter der Tretlagerwelle, also hinter der gedachten Vertikalebene PVB gemäß Fig. 2 bis 4 sowie 8 und 9, sondern insbesondere auch keine Befestigungsachsen bzw. Aufhängungspunkte in einem Bauraum SRL hinter sowie unterhalb der Tretlagerwelle (vgl. Fig. 4), welche bei Antriebseinheiten nach dem Stand der Technik in den meisten Fällen in dem Bereich PVB erforderlich sind.

Gerade die bei Antriebseinheiten aus dem Stand der Technik in dem Bauraum SRL hinter sowie unterhalb der Tretlagerwelle erforderlichen Befestigungsachsen bzw. Aufhängungspunkte am Fahrradrahmen 1 führen zu erheblichem Bauraumverbrauch, zu unerwünschten Verlängerung der Hinterbaustreben, zur Gewichtszunahme des Fahrradrahmens 1 sowie zu Komplikationen bezüglich der Anlenkung der Hinterradaufhängung.

Bei den in der vorliegenden Offenbarung als "Befestigungsachsen" bezeichneten Schnittstellen zwischen einer Antriebseinheit DU und einem Fahrradrahmen 1 muss es sich nicht zwangsläufig um strikt achsenförmige Befestigungen bzw. Schnittstellen handeln.

Vielmehr soll der Begriff "Befestigungsachsen" in der vorliegenden Offenbarung generell voneinander entlang einer Längsachse und/oder entlang einer Hochachse des Fahrrads wesentlich beabstandete und funktionell separate Verbindungsanordnungen an einer Antriebseinheit DU, an einem Fahrradrahmen oder an einer Rahmenschnittstellen-Einheit IU implizieren.

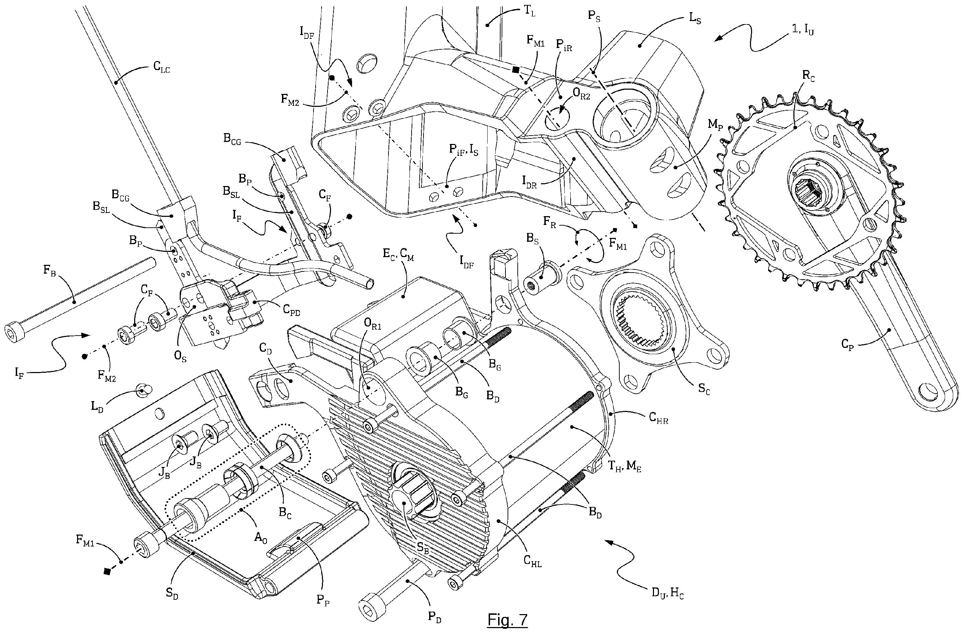

Insbesondere umfasst dabei jede solche Verbindungsanordnung üblicherweise wiederum mehrere entlang einer Querachse des Fahrradrahmens voneinander beabstandete Verbindungsstrukturen zwischen der Antriebseinheit DU und dem Fahrradrahmen, vgl. antriebsseitige Verbindungsstrukturen IR und IF sowie rahmenseitige Verbindungsstrukturen IDR und IDF, die besonders deutlich aus den Fig. 7, 11, 13 und 16 hervorgehen und weiter unten ausführlich beschrieben sind.

Diese Verbindungsstrukturen, bei denen es sich beispielsweise um Verschraubungen handeln kann, müssen nicht zwangsläufig entlang von in Querrichtung des Fahrrads verlaufender Achsen angeordnet sein. Vielmehr können die Längsachsen derartiger Verbindungsstrukturen, beispielsweise Verschraubungen z.B. auch innerhalb von Längsebenen verlaufen, bezogen auf das Fahrrad 1.

Inbesondere kann eine vordere Verbindungsstruktur IF, IDF eine oder mehrere Befestigungsachsen umfassen. Falls die vordere Abstützungsachsanordnung mehrere Befestigungsachsen umfasst, so definiert deren gemeinsame Schwerachse die Lage der in diesem Fall imaginären vorderen Befestigungsachse.

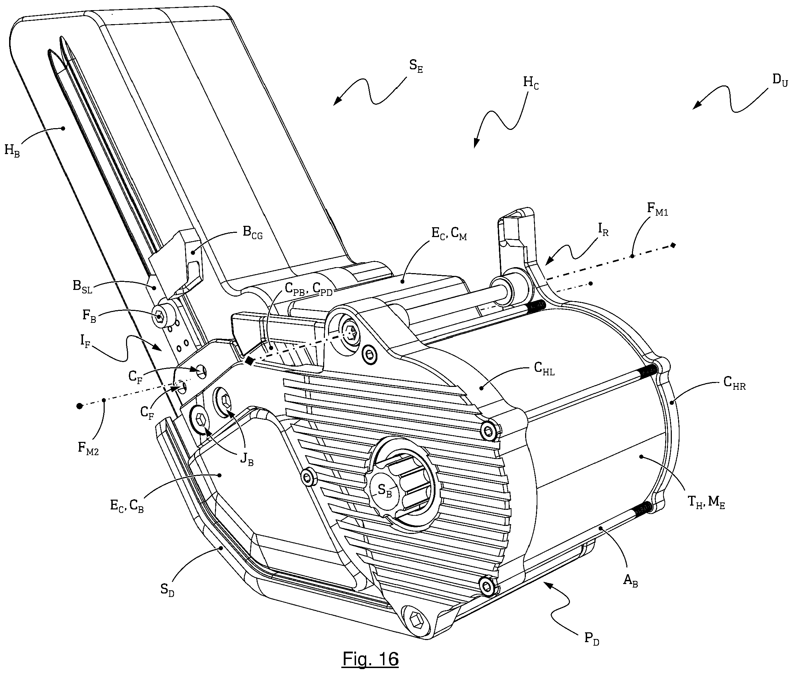

Die hintere Rahmenschnittstellenanordnung IR, und dementsprechend auch die hintere Antriebseinheitsschnittstellen-Anordnung IDR der Rahmenschnittstellen-Einheit IU, liegt dabei bevorzugt auf einer geradlinigen Befestigungsachse FM1 (vgl. Fig. 16, 5, 7 und 11 bis 13).

Im Vergleich mit dem Stand der Technik gemäß Fig. 1 wird bereits aus Fig. 2 deutlich, dass der Massenschwerpunkt CGE der Batterie SE, sowie der gemeinsame Massenschwerpunkt CGC der Antriebseinheit DU einschließlich Batterie SE gemäß der vorliegenden Offenbarung im Fahrrad 1 entscheidend tiefer und erheblich weiter hinten liegt als die entsprechenden Massenschwerpunkte CGEA und CGCA beim Stand der Technik. Der Massenschwerpunkt CGCA gemäß Stand der Technik ist auch in Fig. 3, 4 und 8 nochmals strichliert eingezeichnet.

Durch diese gemäß der vorliegenden Offenbarung erreichte, im Fahrrad 1 extrem weit unten und hinten befindliche Schwerpunktlage CGC werden die in der Beschreibungseinleitung ausführlich dargestellten Nachteile bekannter E-Mountainbikes insbesondere bezüglich Handling und Fahrsicherheit maßgeblich verbessert bzw. behoben.

In Fig. 2, 3 und 8 sind mit strichlierten Linien Umkreise R1, R2, R3 und R4 mit Radien von 175 mm, 150 mm, 125 mm und 100 mm eingezeichnet, die jeweils einen Tretlagerbereich definieren, innerhalb dessen sich die Schwerpunktlage CGE der Energiespeichereinrichtung SE sowie die Schwerpunktlage CGC der Antriebseinheit DU bevorzugt befindet, wenn die Antriebseinheit DU in einer Lage betrachtet wird, die einer am Fahrrad montierten Lage der Antriebseinheit DU beispielsweise gemäß Fig. 2 entspricht.

Daraus wird erkennbar, dass sich die Schwerpunktlage CGC der Antriebseinheit DU gemäß Fig. 2 bis 16 innerhalb des kleinsten Kreises R4, also innerhalb eines Abstands von weniger als 100 mm von der Drehachse der Tretlagerwelle SB befindet.

Dabei geht insbesondere aus Fig. 4 hervor, dass der Massenschwerpunkt CGC der Antriebseinheit DU einschließlich Batterie SE vorteilhaft innerhalb des kleinsten eingezeichneten Quadranten QB4 mit dem Radius R4 = 100mm, und somit sowohl bezüglich seiner Höhe als auch bezüglich seiner horizontalen Lage in unmittelbarer Nähe der Tretlagerwelle SB liegt.

Damit wird deutlich, dass der Gesamtschwerpunkt CGC der Antriebseinheit DU gemäß der vorliegenden Offenbarung maßgeblich tiefer und weiter hinten und damit vorteilhaft weitaus zentraler im Fahrradrahmen 1 liegt als der entsprechende gemeinsame Schwerpunkt CGCA von Motoreinheit UM und Batterie SEA beim Stand der Technik beispielsweise gemäß Fig. 1.

Dies bringt entscheidende Vorteile mit Bezug auf die in der Beschreibungseinleitung ausgeführte Schwerpunktsproblematik bei bekannten E-Mountainbikes mit sich, insbesondere maßgebliche Verbesserungen bezüglich Handling und Fahrsicherheit.

Fig. 2 bis 4 und 8 zeigen zudem eine schräge Ebene IP, welche die Drehachse der Tretlagerwelle SB enthält. Die schräge Ebene IP ist relativ zu einer Horizontalebene um einen Winkel β von 50°, mit Blickrichtung von rechts auf das Fahrrad im Uhrzeigersinn nach vorne gekippt, und grenzt einen Bereich vor und oberhalb des Tretlagers SB ab, innerhalb dessen die beiden Befestigungsachsen FM1 und FM2 zwischen Antriebseinheit DU und Fahrradrahmen 1 bzw. zwischen bevorzugt angeordnet sind. Ebenfalls vorzugsweise sind die beiden Befestigungsachsen FM1 und FM2 innerhalb eines Winkels α von 30° bis 80°, besonders bevorzugt innerhalb eines Winkels α von 50° bis 60° angeordnet, wobei der Scheitel des Winkels α mit der Drehachse der Tretlagerwelle SB zusammenfällt, und wobei der Winkel α in dem Tretlager-Quadranten QB1 lokalisiert ist.

Wie insbesondere aus Fig. 3 hervorgeht, ist in einem im Fahrrad montierten Zustand der Antriebseinheit DU der vertikale Abstand DPV zwischen der hinteren Befestigungsachse FM 1 und dem Angriffspunkt PC der Kettenzugkraft FTC gering, vorzugsweise kleiner als 30 mm, besonders bevorzugt kleiner als 21 mm.

In ähnlicher Weise ist auch der horizontale Abstand DM1 der hinteren Befestigungsachse FM1 und der Drehachse der Tretlagerwelle SB gering, vorzugsweise kleiner als 30 mm, besonders bevorzugt kleiner als 18 mm. Die Tretlagerwelle SB bildet den Angriffspunkt der Fahrer-Gewichts- und Antriebskraft, also der effektiven Pedalkraft FPE, welche näherungsweise in der Tretlagerachsen-Vertikalebene PVB gemäß Fig. 3 verläuft.

Auf diese Weise werden die Drehmomente, die durch diese beiden ggf. sehr hohen Kräfte erzeugt werden, und die von der Antriebseinheit DU auf den Rahmen 1 übertragen werden müssen, minimiert. Insbesondere die Kettenzugkraft FTC kann in dynamischen Belastungsfällen ohne weiteres Größenordnungen von 5000 N erreichen und überschreiten. Die vom Fahrer und von Kette erzeugten Kräfte und Drehmomente werden somit auf kürzestem Wege und mit geringstmöglichem Hebelarm von der Antriebseinheit DU in den Fahrradrahmen 1 eingeleitet.

Durch diese Bauweise und Anordnung der beiden Befestigungsachsen FM 1 und FM2 werden somit die durch Kettenzugkraft FTC und Fahrer-Gewichtskraft/Antriebskraft FPE erzeugten Drehmomente minimiert.

Dies gilt aufgrund der großen effektiven Länge DM2 der Antriebsgehäuse-Ausleger CD, welche eine Drehmomentstütze für die Hauptbefestigung der Antriebseinheit DU an der hinteren Befestigungsachse FM 1 bilden, insbesondere für die Reaktionskräfte an der vorderen Rahmenschnittstellenanordnung IF. Daher können die an der vorderen Rahmenschnittstellenanordnung IF auftretenden und somit verhältnismäßig geringen Reaktionskräfte durch eine vorzugsweise rein reibschlüssige Verbindung zwischen Antriebseinheit DU und Fahrradrahmen 1, welche zudem nur geringen Anforderungen bezüglich der Einhaltung von Maßtoleranzen unterliegt, leicht in den Fahrradrahmen 1 eingeleitet werden.

Im Umkehrschluss bedeutet dies, dass von den beiden Rahmenschnittstellenanordnungen IF und IR lediglich an die hintere Rahmenschnittstellenanordnung IR die üblichen Anforderungen bezüglich Kraftübertragung, Steifigkeit und Einhaltung von Toleranzen gestellt werden, während die vordere Rahmenschnittstellenanordnung IF kräftemäßig nur gering belastet wird, und nur geringen Toleranz- bzw. Genauigkeitsanforderungen unterliegt.

Diese spezifische Verteilung der Aufgaben auf die beiden Rahmenschnittstellenanordnungen IF (Drehmomentabstützung) und IR (auf kürzestem Weg Abstützung aller Kräfte sowie maßliche Referenzierung) bedeutet auch, dass die Verbindung zwischen Antriebseinheit DU und hinterer Rahmenschnittstellenanordnung IR ein besonders hohe Steifigkeit sowie einen besonders direkten Kraftfluss sicherstellen kann.

Weiterhin werden sämtliche Bewegungsfreiheitsgrade der Antriebseinheit DU (außer des Rotationsfreiheitsgrads FR um die hintere Befestigungsachse FM1, vgl. Fig. 7) gegenüber dem Fahrradrahmen 1 nur mittels der hinteren Rahmenschnittstellenanordnung IR festgelegt.

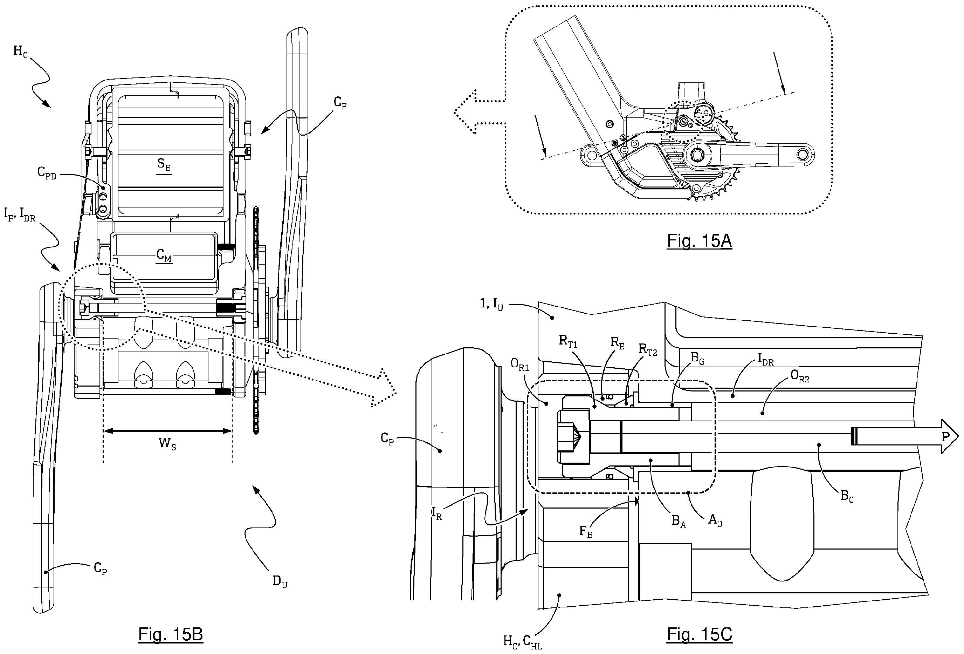

Wie aus Fig. 7, Fig. 11 bis 13 und insbesondere Fig. 15 hervorgeht, umfasst die hintere Rahmenschnittstellenanordnung IR einen Rahmen-Ausgleichsadapter AO zur variablen spielfreien Einstellung der Klemmung in Axialrichtung zwischen dem Antriebsgehäuse HC und der hinteren Antriebseinheitsschnittstellen-Anordnung IDR des Fahrradrahmens 1.

Auf diese Weise wird die vorstehend beschriebene, in alle drei Raumrichtungen spielfrei lastübertragende Verbindung zwischen Antriebsgehäuse HC und hinterer Antriebseinheitsschnittstellen-Anordnung IDR hergestellt wird. Der Aufbau und die Funktionsweise des Ausgleichsadapters AO sind weiter unten beschrieben.

Die Verbindung zwischen Antriebsgehäuse HC und hinterer Antriebseinheitsschnittstellen-Anordnung IDR des Fahrradrahmens 1 mittels des Rahmen-Ausgleichsadapters AO ist dabei nicht nur in axialer Richtung spielfrei, bezogen auf die hintere Befestigungsachse FM1, also auf die Längsachse des Ausgleichsadapters AO. Durch eine entsprechende Wahl der Passungen zwischen dem Außendurchmesser des Rahmen-Ausgleichsadapters AO und den diesen aufnehmenden Bohrungen OR1, OR2 im Antriebsgehäuse HC und in der Antriebseinheitsschnittstellen-Anordnung IDR des Fahrradrahmens 1 lässt sich sicherstellen, dass die Verbindung zwischen Antriebsgehäuse HC und hinterer Antriebseinheitsschnittstellen-Anordnung IDR auch in radialer Richtung spielfrei ist, bezogen auf die Längsachse des Ausgleichsadapters AO.

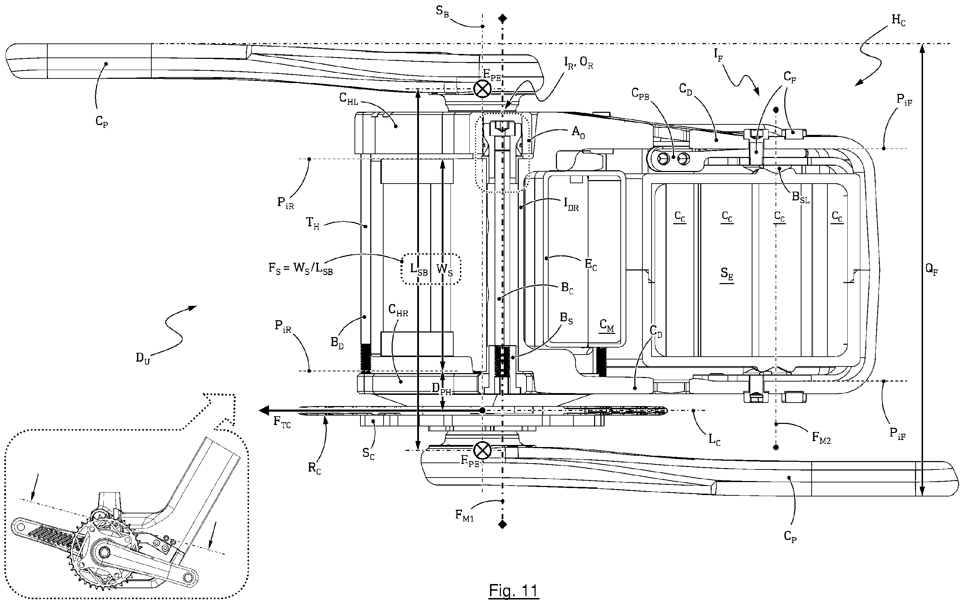

Dabei dient der Rahmen-Ausgleichsadapter AO insbesondere der Aufgabe, etwaige am Fahrradrahmen 1 bzw. an der Antriebseinheitsschnittstellen-Anordnung IDR vorhandene Toleranzen insbesondere in Bezug auf die Abstützbreite WS (vgl. Fig. 11 bis 13 und 15B) auszugleichen.

Dieser Toleranzausgleich ist von erheblicher Bedeutung, da die Antriebseinheit DU in der Praxis des Fahrradmarkts mit verschiedensten Fahrradrahmen 1 bzw. mit ggf. unterschiedlichsten Rahmenschnittstellen-Einheiten IU kombiniert werden kann, wobei die Fahrradrahmen 1, oder ggf. die Rahmenschnittstellen-Einheiten IU, von verschiedensten Herstellern stammen bzw. zugeliefert sein können.

Hierdurch ergeben sich erfahrungsgemäß, je nach Ursprung bzw. Hersteller des Fahrradrahmens 1 oder der Rahmenschnittstellen-Einheit IU, unterschiedlichste Toleranzsituationen in Bezug auf die Abstützbreite WS. Derartige unterschiedliche Toleranzsituationen lassen sich mit dem Ausgleichsadapter AO einfach und stufenlos kompensieren.

Wie vorstehend ausgeführt, dient die vordere Rahmenschnittstellenanordnung IF der Antriebseinheit DU lediglich der Drehmomentabstützung über die Antriebsgehäuse-Ausleger CD, und damit der Festlegung des sechsten Freiheitsgrads FR von sechs Bewegungsfreiheitsgraden der Antriebseinheit DU gegenüber dem Fahrradrahmen 1. Aufgrund des großen horizontalen Abstands DM2 (vgl. insbesondere Fig. 3) zwischen vorderer Rahmenschnittstellenanordnung IF bzw. vorderer Befestigungsachse FM2 und hinterer Rahmenschnittstellenanordnung IR bzw. hinterer Befestigungsachse FM1 ergeben sich dabei nur geringe an der vorderen Rahmenschnittstellenanordnung IF abzustützende Reaktionskräfte.

Demgegenüber kommen beim Stand der Technik üblicherweise drei Befestigungsachsen zur Verbindung von Antriebseinheit und Fahrradrahmen zum Einsatz, bei denen jedoch, anders als bei der vorliegenden Offenbarung, unter den verschiedenen Befestigungsachsen keine spezifische Aufgabenteilung hinsichtlich Kraftübertragung, Momentenübertragung und Festlegung der Bewegungsfreiheitsgrade der Antriebseinheit relativ zum Fahrradrahmen getroffen ist.

Insbesondere existiert bei diesen bekannten Antriebseinheiten kein eindeutiger Lastpfad für die Einleitung der Kräfte und Momente aus der Antriebseinheit in den Fahrradrahmen 1. Vielmehr ist beim Stand der Technik der tatsächliche Lastpfad sowie die Frage, welcher Aufhängungspunkt oder welche Befestigungsachse welchen Anteil der Kräfte und Momente überträgt, im Wesentlichen von zufälligen Toleranzverhältnissen und -verteilungen zwischen den üblicherweise drei weitgehend gleichberechtigten Befestigungsachsen an der Antriebseinheit und am Fahrradrahmen 1 abhängig.

Hierdurch ergeben sich beim Stand der Technik häufig erhebliche Schwierigkeiten hinsichtlich des Toleranzausgleichs bei der Montage der Antriebseinheit am Fahrradrahmen 1, sowie im Hinblick auf eine dauerhaft feste und spielfreie Verbindung zwischen Antriebseinheit und Fahrradrahmen 1.

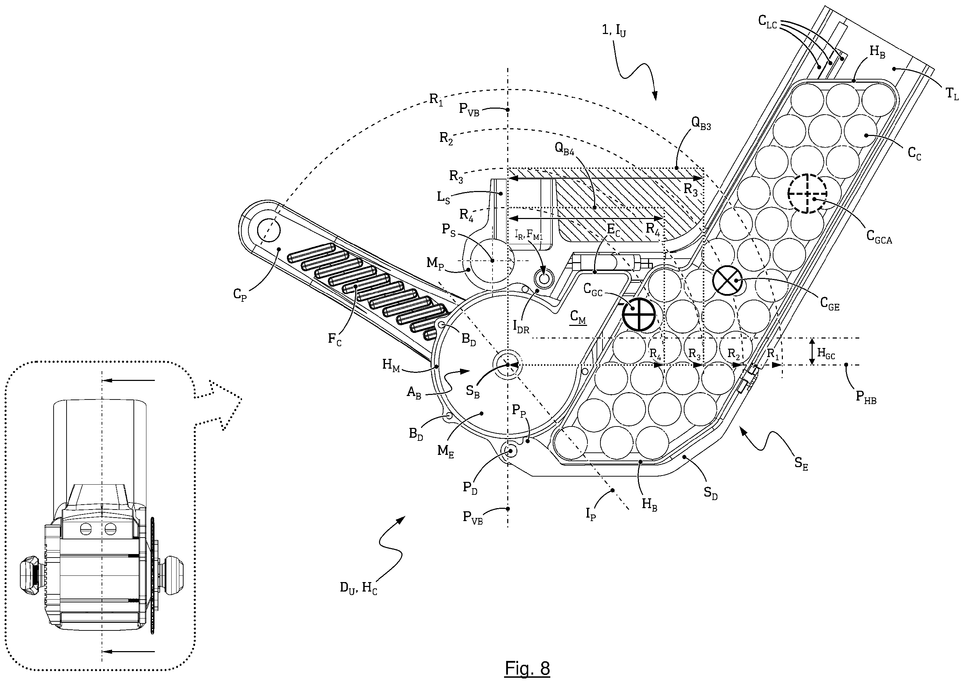

Zudem befindet sich beim Stand der Technik eine der dort üblicherweise drei Befestigungsachsen zur Verbindung von Antriebseinheit und Fahrradrahmen in einem Bereich hinter oder sogar erheblich weit hinter der Vertikalebene PVB (vgl. Fig. 2 bis 1 und 8), welche die Drehachse der Tretlagerwelle SB enthält, typischerweise mehr als ca. 50 mm hinter dieser Vertikalebene PVB, und dabei häufig sogar unterhalb der Horizontalebene PHB, welche die Drehachse der Tretlagerwelle SB enthält.

Dies bedeutet, dass der Fahrradrahmen 1, bzw. eine Rahmenschnittstellen-Einheit IU des Fahrradrahmens, bis verhältnismäßig weit hinter das Tretlager und häufig sogar bis hinten unterhalb der Tretlagerhöhe um das Tretlager herum gebaut werden muss, um dort die erforderliche Befestigungsachse bzw. Befestigungsaufnahme zur Verbindung mit der Antriebseinheit bereitzustellen.

Eine derartige, in der Branche auch als sog. "Rahmenlappen" bekannte Verlängerung bzw. Ausstülpung des Rahmens hinter sowie unterhalb des Tretlagers in dem Bereich SRL (vgl. Fig. 4), um dort die Antriebseinheit befestigen zu können, ist jedoch aufwändig zu fertigen, insbesondere wenn diese gleichzeitig den genannten hohen Anforderungen bezüglich Einhaltung von Toleranzen und Aufnahme von Kräften erfüllen soll. Zudem steht eine derartige Verlängerung bzw. Ausstülpung des Rahmens hinter dem Tretlager in Konflikt mit der üblicherweise in demselben Bauraumbereich angeordneten Aufnahme für die Hinterbauschwingen-Lageraufnahme MP (vgl. Fig. 1 bis 10), was deren konstruktive Auslegung und Optimierung entscheidend erschweren kann.

Diese vorstehend beschriebene, problematische Gemengelage wird mit der Antriebseinheit DU gemäß der vorliegenden Offenbarung gelöst insbesondere dadurch, dass besonders bevorzugt genau zwei Rahmenschnittstellen-Anordnungen IR, IF bzw. genau zwei gedachte Befestigungsachsen FM1, FM2 vorgesehen sind.

Von diesen ist die hintere Rahmenschnittstellenanordnung IR bzw. Befestigungsachse FM1, wie vorstehend mit Bezug auf Fig. 3 ausgeführt, sehr nahe an den wesentlichen Kraftangriffslinien sowohl der Kettenzugkraft FTC als auch der Fahrer-Gewichts- und Antriebskraft FPE positioniert, und übernimmt alle Toleranzausgleichs- und Kraftübertragungsaufgaben, ebenso wie die Festlegung aller Bewegungsfreiheitsgrade der Antriebseinheit DU, außer dem Rotations-Freiheitsgrad FR um die hintere Befestigungsachse FM1, vgl. Fig. 7. Daher kann die vordere Rahmenschnittstellenanordnung IF in Form eines verhältnismäßig leichten und nur geringen Toleranzanforderungen unterliegende Drehmomentauslegers ausgebildet werden, der lediglich noch zur Festlegung des verbleibenden Rotationsfreiheitsgrads FR der Antriebseinheit DU benötigt wird.

Die Antriebseinheit DU besitzt dementsprechend genau zwei Rahmenschnittstellenanordnungen IR, IF, bzw. Befestigungsachsen FM1 und FM2, die zur Verbindung mit jeweils zugehörigen Antriebseinheitsschnittstellen-Anordnungen IDR, IDF des Fahrradrahmens 1 bzw. der Rahmenschnittstellen-Einheit IU ausgebildet sind.

Wie aus Fig. 3 bis 9 sowie Fig. 10, 13, 14 und 16 hervorgeht, besitzt die Antriebseinheit DU eine Antriebsschutzschild-Klappe SD, hinter welcher die Batterie SE angeordnet ist.

Die Antriebsschutzschild-Klappe SD schützt die Antriebseinheit DU und insbesondere die entnehmbare Batterie SE, und bildet gleichzeitig eine bewegbare Klappe zum Zweck der Batteriehalterung und Batterieentnahme.

Wie insbesondere aus Fig. 8 bis 10 sowie Fig. 14 hervorgeht, ist die Antriebsschutzschild-Klappe SD in deren hinterem Bereich mittels einer Schwenklagerung PD direkt am gemeinsamen Gehäuse HC von Motor ME und Batterie SE befestigt und wird in deren vorderem Bereich mittels einer Verschlussanordnung LD an dem Antriebsgehäuse HC fixiert.

Diese Ausführung der Antriebsschutzschild-Klappe SD ist in mehrfacher Hinsicht vorteilhaft. Zunächst werden damit die erheblichen Kräfte, die insbesondere beim Aufsetzen des Fahrrads im Tretlagerbereich beispielsweise auf Hindernisse auftreten, was beim sportlichen Einsatz durchaus häufig vorkommt, direkt von der Antriebsschutzschild-Klappe SD über die Befestigungsschnittstellen PD, LD der Antriebsschutzschild-Klappe SD am Antriebsgehäuse HC in das Antriebsgehäuse HC, und von diesem über die Rahmenschnittstellen-Anordnungen IR, IF der Antriebseinheit DU und über die Antriebseinheitsschnittstellen-Anordnungen IDR, IDF direkt in den Fahrradrahmen 1 eingeleitet. Da sowohl das Antriebsgehäuse HC mit den Rahmenschnittstellen-Anordnungen IR, IF als auch die Antriebseinheitsschnittstellen-Anordnungen IDR, IDF für die Aufnahme hoher Kräfte ausgelegt sind, lassen sich solche beispielsweise beim Aufsetzen des Fahrrads auftretenden Kräfte problemlos aufnehmen und sicher in den Fahrradrahmen 1 einleiten.

Der Fahrradrahmen 1 wird zudem weiter maßgeblich entlastet dadurch, dass der Fahrer beim Aufsetzen des Fahrrads im Tretlagerbereich auf ein Hindernis häufig in den Pedalen steht. Hierbei können die Stoßkräfte dank der Befestigung der Antriebsschutzschild-Klappe SD am Antriebsgehäuse HC direkt über die Lagerung BR, BL der Tretlagerwelle SB vom Antriebsgehäuse HC in die Tretlagerwelle SB und von dort in die dämpfenden und abfedernden Beine des Fahrers eingeleitet werden.

Beim Stand der Technik hingegen sind Antriebsschutzschilde üblicherweise nicht mit dem Antriebsgehäuse, sondern direkt mit dem Fahrradrahmen 1 verbunden. Aus diesem Grund besteht beim Stand der Technik ein erhebliches Risiko, den Fahrradrahmen beispielsweise beim Aufsetzen auf Hindernisse zu beschädigen.

Zwischen der Antriebsschutzschild-Klappe SD und der Batterie SE befindet sich, zumindest über die freitragende Länge der Antriebsschutzschild-Klappe SD, vorzugsweise ein Luftspalt, damit die freitragende Länge der Antriebsschutzschild-Klappe SD bei auftretenden Kraftstößen elastisch nachgeben und die Kraftstöße entsprechend abfangen kann, ohne dass es zu einer Kollision der Antriebsschutzschild-Klappe SD mit der Batterie SE und zu unzulässig hohen mechanischen Belastungen der Batterie SE kommt.

Alternativ ist auch eine zumindest teilweise Ableitung von Kraftstößen über den freitragenden Bereich der Antriebsschutzschild-Klappe SD auf die Batterie SE möglich. Hierzu wird das Batteriegehäuse HB entsprechend robust ausgebildet, und vorzugsweise eine dämpfende und die Kraft verteilende Elastomerzwischenlage zumindest zwischen dem freitragenden Bereich der Antriebsschutzschild-Klappe SD und dem vorderen unteren Bereich der Batterie SE vorgesehen.

Mit der Antriebsschutzschild-Klappe SD gemäß der vorliegenden Offenbarung kann zudem auf die beim Stand der Technik (vgl. Fig. 1) üblicherweise erforderlichen weiteren mechanischen Schnittstellen zwischen Fahrradrahmen 1 und Batterie SE zum Zweck der Batteriebefestigung verzichtet werden, wodurch Aufwand, Kosten und mögliche Fehlerquellen weiter entscheidend verringert werden.

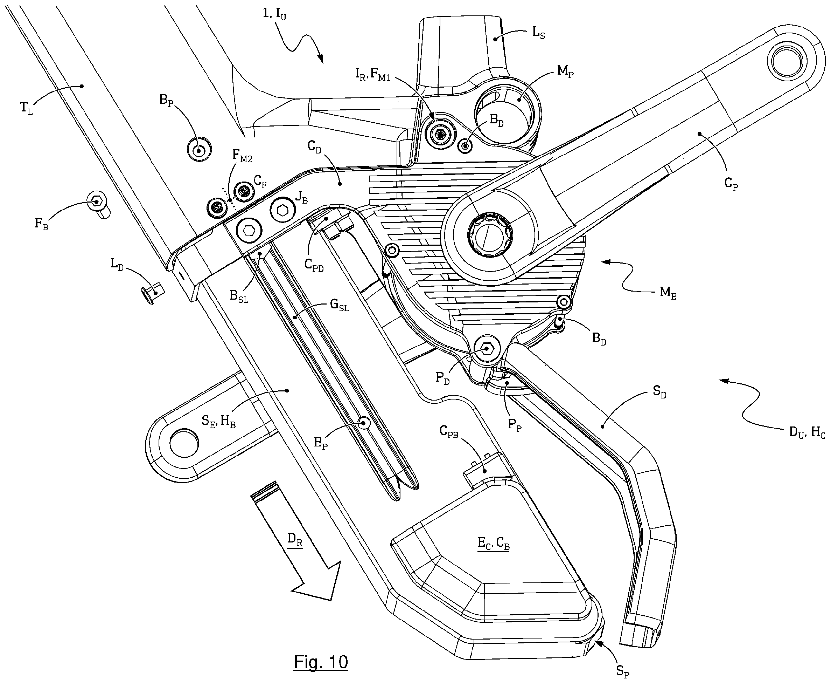

Die Antriebsschutzschild-Klappe SD ist bevorzugt mit einem Einschubvorsprung PP versehen (vgl. Fig. 7 bis 10), welche das Einsetzen der Batterie SE erleichtert. Durch den Einschubvorsprung PP erfolgt am Schluss des Schließens der Antriebsschutzschild-Klappe SD ein handkraftverstärkender Hebeleffekt von der Antriebsschutzschild-Klappe SD auf eine formkorrespondierend ausgebildete Andruckfläche SP am unteren Ende der Batterie SE und damit eine Zwangsführung der Batterie SE entlang der Einschubrichtung. Aufgrund dieser Hebelwirkung der Antriebsschutzschild-Klappe SD lässt sich die zur kontaktbildenden Zusammenführung des batterieseitigen Steckverbinders CPB mit dem antriebsseitigen Steckverbinder CPD erforderliche Steckkraft beim Einschieben der Batterie SE leicht und zuverlässig aufbringen, vgl. Fig. 10.

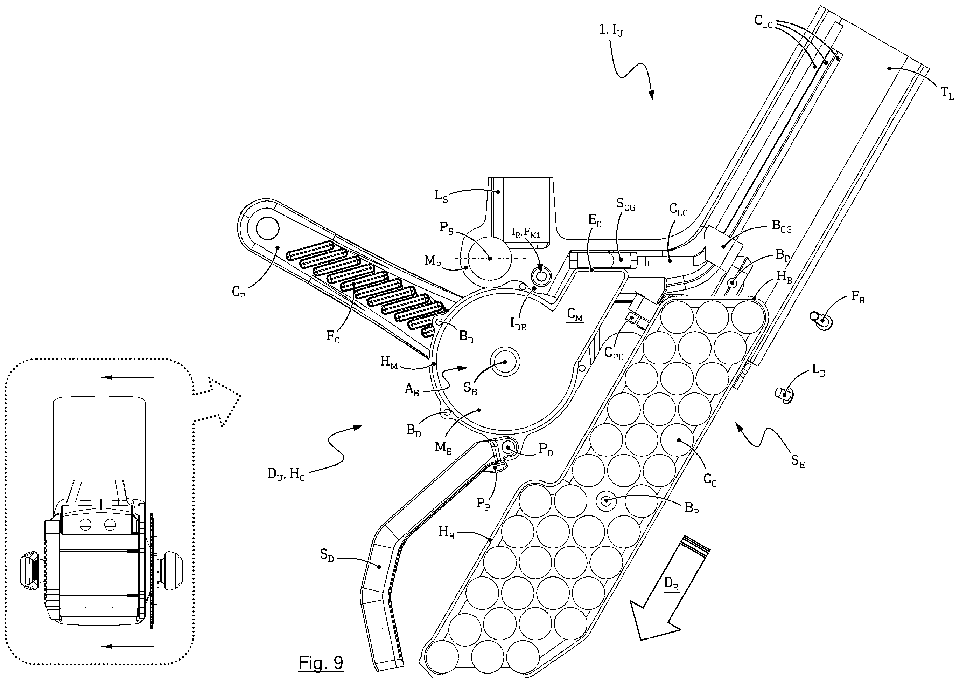

In Fig. 10 erkennbar (vgl. auch Fig. 7, 9 und 13) ist auch die Parallelführung der Batterie SE im Antriebsgehäuse HC der Antriebseinheit DU mittels der antriebsseitigen Gleitschuhe BSL und der batterieseitigen Gleitschienen GSL. Wie eine Zusammenschau mit Fig. 9 ergibt, können in einem Bereich vor oder insbesondere hinter den Gleitschuhen BSL zusätzliche Leitungen wie beispielsweise elektrische Verbindungsleitungen, Hydraulikleitungen für Bremsen oder Bowdenzüge für Schaltwerke angeordnet werden. Dabei können auch Kabelführungshülsen BCG, oder Kabelführungsklammern vorgesehen sein, die das Einführen der entsprechenden Verbindungsleitung oder Kabel erleichtern.

Der in Fig. 7, 9 und 10 dargestellte Schraubenbolzen FB wird bei eingelegter Batterie SE durch die in Fig. 7, 9, 10, 13 und 14 erkennbaren Durchgangsbohrungen BP geführt und festgezogen. Auf diese Weise wird die Batterie SE zwischen den beiden antriebsseitigen Gleitschuhen BSL geklemmt und somit relativ zum Antriebsgehäuse HC der Antriebseinheit DU festgelegt. Die Durchgangsbohrungen BP in Fahrradrahmen 1 bzw. in der Rahmenschnittstellen-Einheit IU sind dabei so groß ausgeführt, dass der Schraubenbolzen FB im eingeschraubten Zustand keine Berührung mit dem Fahrradrahmen 1 bzw. in der Rahmenschnittstellen-Einheit IU aufweist. Auch dies reduziert die Anforderungen hinsichtlich der Einhaltung von Genauigkeitstoleranzen im Bereich der vorderen Befestigungsachsen FM2 bzw. im Bereich der vorderen rahmenseitigen Antriebseinheitsschnittstellen-Anordnung IDF des Fahrradrahmens 1 bzw. der Rahmenschnittstellen-Einheit IU.

Fig. 8 und 9 zeigen insbesondere das (das hier geschnitten dargestellte) Batteriegehäuse HB mit darin enthaltenen Batteriezellen bzw. Akkuzellen CC. Wie in Fig. 8 und 9 erkennbar, sind die Akkuzellen CC vorzugsweise in einer hexagonalen Packung mit minimalem gegenseitigen Abstand angeordnet. Da die hexagonale Packung der räumlichen Anordnung von zylindrischen Körpern mit der höchsten Packungsdichte entspricht, lässt sich hierdurch eine hohe Batteriekapazität in einem geringem Volumen erzielen.

Gleichzeitig ermöglicht es die hexagonale Packung zusammen mit der Anordnung der meisten oder aller Akkuzellen CC achsparallel zur Tretlagerwelle, der Batterie SE eine optimal an die irregulär geformten räumlichen Randbedingungen zwischen Antriebsgehäuse HC/TH, Controllereinrichtung CMB, Unterrohr TL bzw. Unterrohrmuffe LL angepasste Form zu verleihen.

Hierdurch lässt sich der Energieinhalt der Batterie SE maximieren, es wird eine einfache Entnahme der Batterie SE durch aus der Antriebseinheit DU sichergestellt (vgl. Fig. 9, 10 und 14), und ein fester und klapperfreier Einschluss der Batterie SE in der Antriebseinheit DU wird gewährleistet, obwohl keine keine Verriegelungen oder Befestigungsmittel für die Batterie seitens des Fahrradrahmens vorhanden und erforderlich sind.

Weiter erkennt man in Fig. 8 und 9 einen Gehäusebereich EC zur Aufnahme einer Controllereinrichtung CMB für Motor und/oder Batterie SE (vgl. auch Fig. 16). Im Batteriegehäuse kann zusätzlich ein Batteriecontroller CB enthalten sein (in Fig. 8/9 nicht dargestellt, vgl. jedoch z.B. Fig. 9), der insbesondere für das Aufladen der Batterie SE zuständig ist.

Gemäß Fig. 7, 9, 10, 14 und 16 befindet sich zwischen Controllereinrichtung CMB und Batterie SE eine elektrische Schnittstelle mit einem batterieseitigen Steckverbinder CPB und einem controllerseitigen bzw. antriebsseitigen Steckverbinder CPD zur Energieübertragung und ggf. Kommunikation zwischen Controllereinrichtung CMB und Batterie SE.

Die elektrische Schnittstelle CPD, CPB, die bevorzugt in Form einer Steckerverbindung ausgebildet ist, wird beim Öffnen der Antriebsschutzschild-Klappe SD und nachfolgendem Absenken der Batterie SE in Entnahmerichtung DR gemäß Fig. 9, 10 und 14 automatisch getrennt.

Ebenso wird die elektrische Schnittstelle CPD, CPB beim Einsetzen der Batterie SE und beim nachfolgenden Schließen der Antriebsschutzschild-Klappe SD durch die Parallelführung der Batterie SE im Antriebsgehäuse HC der Antriebseinheit DU mittels der antriebsseitigen Gleitschuhe BSL und der batterieseitigen Gleitschienen GSL automatisch wie kinematisch eindeutig bestimmt wieder zusammengeführt, wodurch Fehlbedienungen und eine damit verbundene fehlerhafte Kontaktierung oder Beschädigung der Schnittstellenkontakte ausgeschlossen sind.

In Fig. 10 ist der antriebsseitige Steckverbinder CPD lediglich darstellungshalber ein Stück weit in Entnahmerichtung DR der Batterie SE verschoben gezeichnet, damit der antriebsseitige Steckverbinder CPD in Fig. 10 zeichnerisch nicht von dem Antriebsgehäuse-Ausleger CD verdeckt wird. In Fig. 7 und Fig. 9 hingegen ist der antriebsseitige Steckverbinder CPD in der tatsächlichen Originalposition bei dieser Ausführungsform gezeigt, und befindet sich somit in vor Beschädigungen geschützter Position hinter dem Antriebsgehäuse-Ausleger CD.

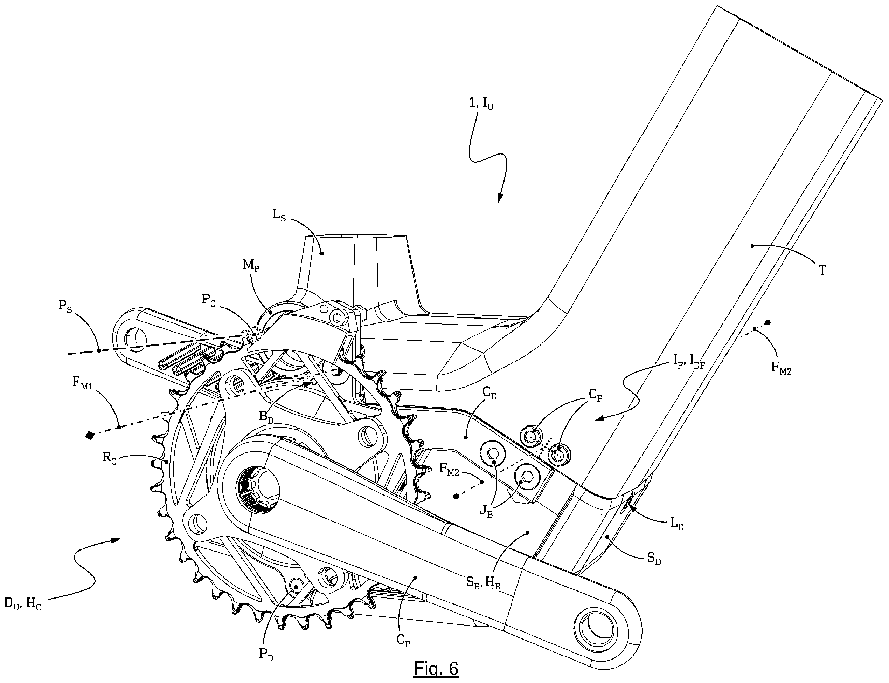

Die Antriebsschutzschild-Klappe SD weist einen Antriebsschutzschild-Verschluss LD auf, der vorzugsweise als mit üblichem Innensechskantschlüssel leicht entfernbarer Bolzen zum einfachen Öffnen der Antriebsschutzschild-Klappe SD ausgebildet ist (vgl. Fig. 6, 7, 9, 10, 14). Auf diese Weise bildet die Antriebsschutzschild-Klappe SD somit gleichzeitig einen wesentlichen Bestandteil des Antriebsgehäuses HC, insbesondere dessen Batteriefachs zur Aufnahme und Halterung der Batterie SE.

Im Unterschied zu dem in den Figuren dargestellten Ausführungsbeispiel kann eine Antriebsschutzschild-Klappe SD auch mit der Batterie verbunden oder einstückig mit einem Teil des Batteriegehäuses ausgebildet sein, so dass die Batterie selbst die Funktion der Antriebsschutzschild-Klappe SD mit übernimmt.

In den Fig. 3 bis 10 ist weiterhin eine Hinterbauschwingen-Lageraufnahme MP erkennbar, die in Form einer in das Antriebsgehäuse HC, oder, gemäß der dargestellten Ausführungsform, in den Fahrradrahmen 1 bzw. in eine Rahmenschnittstellen-Einheit IU integrierten Lageraufnahme MP zur schwenkbaren Lagerung der gefederten Hinterbauschwinge 2 des Fahrradrahmens vorliegt.

Die Lagerachse PS der Hinterbauschwinge AS verläuft idealerweise und daher bevorzugt durch den bzw. sehr nahe beim Haupt-Kraftangriffspunkt PC der Kettenzugkraft FTC am Kettenrad RC (vgl. Fig. 3 bis 6), um keine unerwünschten Einfederungsbewegungen der Hinterbauschwinge AS insbesondere in Abhängigkeit der Kettenzugkraft FTC zu verursachen.

Wie bereits weiter oben ausgeführt, dienen die Antriebsgehäuse-Ausleger CD der Festlegung des sechsten (rotatorischen) Bewegungsfreiheitsgrads FR (vgl. Fig. 7) der Antriebseinheit DU gegenüber dem Fahrradrahmen 1 bzw. gegenüber der Rahmenschnittstellen-Einheit IU, indem die Antriebsgehäuse-Ausleger CD mit der vorderen Antriebseinheitsschnittstellen-Anordnung IDF des Fahrradrahmens 1 verbunden werden.

Da die Verbindung der Antriebsgehäuse-Ausleger CD mit der vorderen Antriebseinheitsschnittstellen-Anordnung IDF des Fahrradrahmens 1, wie ebenfalls bereits weiter oben bei der Diskussion der Aufgabenverteilung der beiden Rahmenschnittstellenanordnungen IF und IR ausgeführt, nur vergleichsweise geringe Kräfte übertragen und keine hohen Genauigkeitsanforderungen bzw. Toleranzanforderungen erfüllen muss, genügt es und ist daher bevorzugt, dass die Verbindung zwischen Antriebsgehäuse-Ausleger CD und vorderer Antriebseinheitsschnittstellen-Anordnung IDF durch Reibschluss erfolgt.

Hierzu dient bei der Antriebseinheit gemäß Fig. 2 bis 16 ein reibender Kontakt, der zwischen Außenoberflächen OS der RahmenschnittstellenAnordnung IF an den Antriebsgehäuse-Auslegern CD und entsprechenden Innenoberflächen IS der vorderen Antriebseinheitsschnittstellen-Anordnung IDF des des Fahrradrahmens 1 hergestellt wird, vgl. Fig. 7. Der reibende Kontakt wird durch Klemmkräfte der Verschraubung CF zwischen der vorderen antriebsseitigen Rahmenschnittstellenanordnung IF und der vorderen rahmenseitigen Schnittstellenanordnung IDF erzeugt.

Wie bereits ausgeführt, dient diese Verbindung vom Antriebsgehäuse-Ausleger CD des Antriebsgehäuses HC über die vordere Rahmenschnittstellenanordnung IF des Antriebsgehäuses HC mit der vorderen Antriebseinheitsschnittstellen-Anordnung IDF des Fahrradrahmens 1 lediglich der rotatorischen Fixierung der Antriebseinheit DU und der Drehmomenteinleitung ausgehend von der Antriebseinheit DU in den Fahrradrahmen. Entsprechend geringe Anforderungen hinsichtlich Krafteinleitung und insbesondere Genauigkeit der Toleranzen bei der Fertigung werden an die vordere Antriebseinheitsschnittstellen-Anordnung IDF der Rahmenschnittstellen-Einheit IU bzw. des Fahrradrahmens 1 gestellt.

Die vorliegend bevorzugte Verbindung zwischen Antriebsgehäuse-Ausleger CD und vorderer Antriebseinheitsschnittstellen-Anordnung IDF durch Reibschluss, beispielsweise mittels der Verschraubung CF, ist diesbezüglich vorteilhaft insofern, als diese nur sehr geringe Anforderungen an die Fertigungsgenauigkeit der rahmenseitigen vorderen Antriebseinheitsschnittstellen-Anordnung IDF sowie der antriebsseitigen Rahmenschnittstellenanordnung IF, hier also insbesondere an die Genauigkeit der rahmenseitigen Bohrungen und Gewinde der Verschraubung CF stellt.

Auch in axialer Richtung, bezogen auf die vordere Befestigungsachse FM2 stellt die lediglich als Drehmomentausleger zur Festlegung des Rotation-Freiheitsgrads FR benötigte Verbindung zwischen den Antriebsgehäuse-Auslegern CD und der vorderen, rahmenseitigen Antriebseinheitsschnittstellen-Anordnung IDF der lediglich sehr geringe Anforderungen.

Aufgrund deren nur geringer Belastung können die Antriebsgehäuse-Ausleger CD insbesondere so ausgelegt werden, dass diese im kräftefreien, nicht montierten Zustand der Antriebseinheit DU einen gegenüber den Schnittstellenflächen bzw. Schnittstellenebenen PiF der vorderen Antriebseinheitsschnittstellen-Anordnung IDF etwas zu großen Abstand aufweisen. Bei der Montage der Antriebseinheit DU werden die Antriebsgehäuse-Ausleger CD sodann durch die Kraft der Verschraubung CF geringfügig nach innen elastisch verformt, wodurch etwaige Abstandstoleranzen der Schnittstellenebenen PiF der vorderen Antriebseinheitsschnittstellen-Anordnung IDF großzügig und leicht ausgeglichen werden können.

Hingegen erfolgt die maßliche Fixierung der Antriebseinheit DU gegenüber der Rahmenschnittstellen-Einheit IU bzw. gegenüber dem Fahrradrahmen 1 in allen drei Raumrichtungen, und die Übertragung der in diesen Raumrichtungen verlaufenden Kraftkomponenten praktisch ausschließlich durch die in allen drei Raumrichtungen vorzugsweise formschlüssige Verbindung zwischen hinterer Antriebseinheitsschnittstellen-Anordnung IDR und Antriebseinheit DU (vgl. Fig. 7, 11 und 12, 13, 15 und 16).

An die Verbindung zwischen Antriebsgehäuse-Ausleger CD und vorderer Antriebseinheitsschnittstellen-Anordnung IDF dagegen werden nur geringe Anforderungen hinsichtlich Genauigkeit und Toleranzen gestellt, was - neben den oben bei der Diskussion der Aufgabenverteilung der beiden Rahmenschnittstellenanordnungen IF und IR beschriebenen Vorteilen - auch den Herstellungsaufwand und die Herstellungskosten für den Fahrradrahmen 1 bzw. für die Rahmenschnittstellen-Einheit IU verringert.

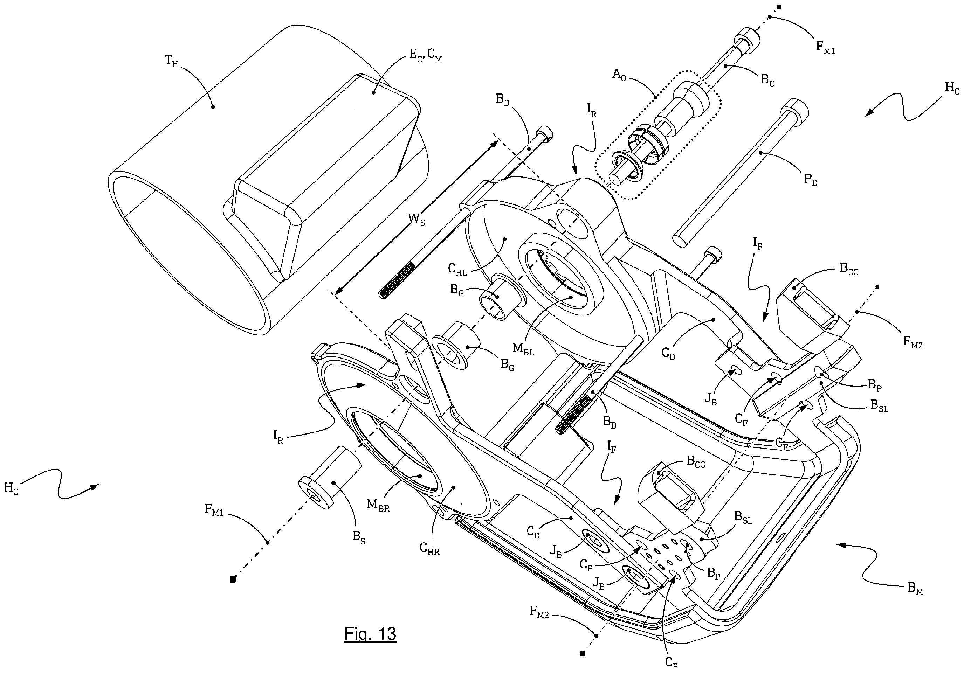

Aus Fig. 7 geht, unter Zusammenschau insbesondere mit Fig. 13 hervor, dass sich das Antriebsgehäuse HC, welches hier gleichzeitig das gemeinsame Gehäuse HC für Motor ME und Batterie SE bildet, im wesentlichen aus fünf Haupt-Gehäuseteilen zusammensetzt, nämlich aus zwei Gehäusedeckeln CHL und CHR, einem bevorzugt im Wesentlichen oder gänzlich prismatischen Gehäuserohr TH, einer Batterieaufnahmeanordnung BM zur Halterung der Batterie SE sowie der Antriebsschutzschild-Klappe SD.

Beim dargestellten Ausführungsbeispiel ist die Batterieaufnahmeanordnung BM als im Wesentlichen U-förmiges Stanzbiegeteil ausgebildet, welches mit den Gehäusedeckeln CHL und CHR mittels einer Schraubverbindung JB verschraubt ist.

Sind die Gehäusedeckel CH zusammen mit dem Gehäuserohr TH mittels einer Mehrzahl von Motorgehäuse-Schrauben BD zu dem Antriebsgehäuse HC verbindbar.

Wie insbesondere Fig. 13 zeigt, bilden die Gehäusedeckel CH vorzugsweise jeweils einstückig jeweils einen der Antriebsgehäuse-Ausleger CD, und weisen Lageraufnahmen MBR, MBL auf, in welche linksseitig eine Lagerung BL für die Tretlagerwelle SB, und rechtsseitig eine Lagerung BR für eine Motor-Ausgangshohlwelle SHM zum Antrieb eines Kettenrads RC über einen Kettenrad-Spider SC aufnehmbar ist.

Die an der Antriebseinheit DU angeordneten Rahmenschnittstellen-Anordnungen IR, IF als formkorrespondierende Gegenstücke zu den Antriebseinheitsschnittstellen-Anordnungen IDR, IDF der Rahmenschnittstellen-Einheit IU bzw. des Fahrradrahmens 1 befinden sich vorzugsweise an den Gehäusedeckeln CH der Antriebseinheit DU, wie insbesondere aus Fig. 13, 14 und 16 hervorgeht Dabei sind die Rahmenschnittstellen-Anordnungen IR, IF vorzugsweise einstückig mit den Gehäusedeckeln CH ausgebildet.

Auf diese Weise wird unter anderem eine wünschenswert maximal große Abstützbreite WS der Verbindung zwischen den Rahmenschnittstellen-Anordnungen IR, IF der Antriebseinheit DU und dem Fahrradrahmen 1 bzw. der Rahmenschnittstellen-Einheit IU erreicht (vgl. Fig. 11 bis 13 und 15B), was die Steifigkeit der Verbindung zwischen Fahrradrahmen und Antriebseinheit DU sowie den direkten Kraftfluss optimiert.

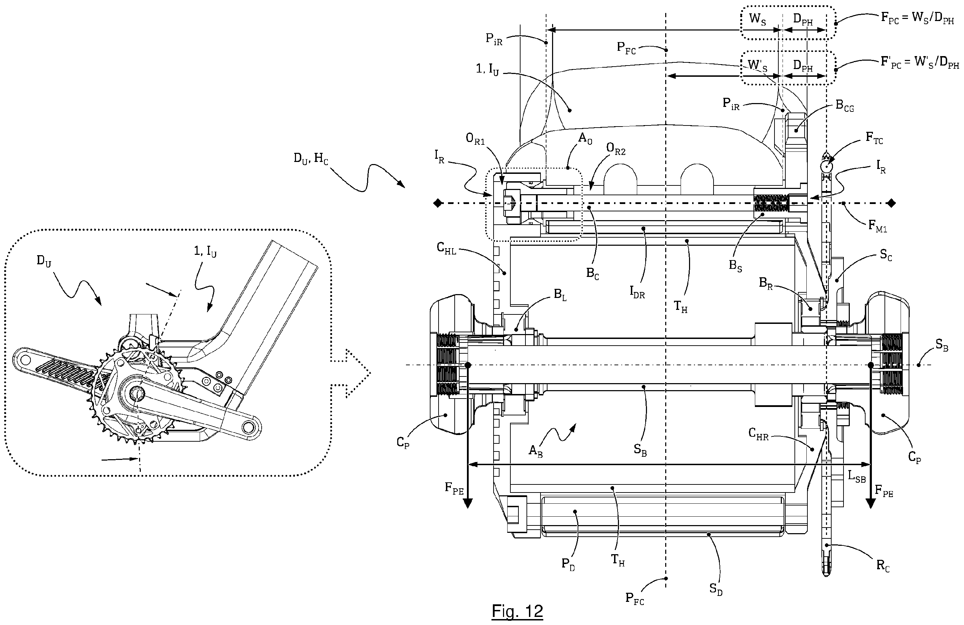

Wie insbesondere in Fig. 12 dargestellt, kann die Antriebseinheit DU bezüglich ihrer wesentlichen Abmessungen in Querrichtung (entlang der Achse der Tretlagerwelle SB) asymmetrisch in Bezug auf eine Rahmenmittelebene PFC ausgebildet sein. Dabei können wesentliche Abmessungen in Querrichtung linksseitig größer sein als entsprechende rechtsseitige Abmessungen. Hierdurch wird es möglich, die ggf. sehr hohen Kettenzugkräfte FTC mit minimalem Kettenzug-Horizontalabstand DPH zur rechtsseitigen Schnittstellenebene PiR der zugehörigen hinteren Rahmenschnittstellenanordnung IR zu führen. Hierdurch werden die durch die Kettenzugkräfte FTC erzeugten Drehmomente und damit Verwindungen der Antriebseinheit DU, der Rahmenschnittstellen-Einheit IU bzw. des Fahrradrahmens 1.

Durch die vorzugsweise einstückige Anordnung der Rahmenschnittstellen-Anordnungen IR, IF in den Gehäusedeckeln CH werden Gewichts- bzw. Antriebskräfte FPE auf die Tretlagerwelle SB sowie Kettenzugkräfte FTC direkt über die in den Gehäusedeckeln CH angeordneten Lagerungen BL, BR in die Gehäusedeckel CH, und von dort über die Rahmenschnittstellen-Anordnungen IR, IF und die Antriebseinheitsschnittstellen-Anordnungen IDR, IDF in die Rahmenschnittstellen-Einheit IU und damit in den Fahrradrahmen geleitet.

Das zentrale Gehäuserohr TH (s. Fig. 13) muss demzufolge kaum Last übertragen, und kann hinsichtlich anderer Aspekte, beispielsweise im Hinblick auf Materialauswahl und Fertigungsmöglichkeiten optimiert werden. Aufgrund der vorzugsweise prismatischen Gestalt des Gehäuserohrs TH ergeben sich eine einfache und kostengünstige Fertigungsmöglichkeiten, beispielsweise durch Drehen oder Strangpressen eines Aluminiumrohrs.

Auch lässt sich das Gehäuserohr TH im Hinblick auf maximale Wärmeleitfähigkeit bei gleichzeitig geringem Gewicht optimieren, indem bevorzugt eine Aluminiumlegierung wie beispielsweise AL6060 für das Gehäuserohr TH gewählt wird, welche eine weitaus bessere Wärmeleitfähigkeit als das im Stand der Technik häufig verwendete Magnesium aufweist.

Alternativ, und in den Figuren nicht dargestellt, können die Gehäusedeckel CH auch am Fahrradrahmen 1 angeordnet, insbesondere einstückig mit dem Fahrradrahmen ausgebildet sein. Es ist ebenfalls eine Ausführungsform vorgesehen, bei der einer der Gehäusedeckel, bevorzugt der auf der Antriebsseite, also fahrerbezogen rechtsseitig angeordnete Gehäusedeckel CHR am Fahrradrahmen angeordnet und vorzugsweise einstückig mit dem Fahrradrahmen ausgebildet ist, während der andere, linksseitige Gehäusedeckel CHL als separates, vom Gehäuserohr TH trennbares Bauteil ausgebildet ist. Hierdurch wird eine einfache Zugangsmöglichkeit zu dem dergestalt zumindest teilweise einstückig mit dem Fahrradrahmen 1 ausgebildeten Antriebsgehäuse HC geschaffen, beispielsweise zu Wartungszwecken.

Nachfolgend werden besonders bevorzugte Positionen der Rahmenschnittstellen-Anordnungen IR, IF bzw. Antriebseinheitsschnittstellen-Anordnungen IDR, IDF relativ zur Antriebseinheit DU bzw. relativ zur Rahmenschnittstellen-Einheit IU zusammenfassend dargestellt (vgl. Fig. 2 bis 4 und Fig. 7 bis 11).

Wie insbesondere aus Fig. 3 hervorgeht, liegen bevorzugt alle Rahmenschnittstellenanordnungen IR, IF bzw. Antriebseinheitsschnittstellen-Anordnungen IDR, IDF und damit die beiden Befestigungsachsen FM1, FM2 als Schnittstellen zwischen Antriebseinheit DU und Fahrradrahmen 1 bzw. zwischen Antriebseinheit DU und Rahmenschnittstellen-Einheit IU in einem vertikalen Bereich oberhalb einer gedachten Horizontalebene PHB, welche die Drehachse der Tretlagerwelle SB enthält, sowie unterhalb einer Horizontalebene PHC, welche den Angriffspunkt PC der Kettenzugkraft FTC enthält.

Zur Minimierung von durch die Kettenzugkraft FTC erzeugten Drehmomenten und entsprechenden Belastungen bzw. Verformungen von Antriebseinheit DU, Rahmenschnittstellen-Einheit IU bzw. Fahrradrahmen 1 ist dabei der vertikale Abstand DPV zwischen der hinteren Befestigungsachse FM1 und dem Angriffspunkt PC der Kettenzugkraft FTC möglichst klein, vorzugsweise kleiner als 30 mm, besonders bevorzugt kleiner als 20 mm.

Ebenfalls bevorzugt liegen die beiden Befestigungsachsen FM1, FM2 weiter vorn als eine gedachte Vertikalebene PVB, welche die Drehachse der Tretlagerwelle SB enthält, bevorzugt mehr als 20 mm weiter vorn als die gedachte Vertikalebene PVB.

Vorzugsweise liegen die beiden Befestigungsachsen FM1, FM2 vor einer gedachten schrägen Ebene IP, welche die Drehachse der Tretlagerwelle SB enthält, wobei die schräge Ebene IP relativ zu einer Horizontalebene um einen Winkel β von 50° nach vorne gekippt ist, mit anderen Worten im Uhrzeigersinn gekippt, bezogen auf eine Ansicht von rechts wie beispielsweise gemäß Fig. 2 und 3.

In einer besonders bevorzugten Kombination der drei vorstehend genannten Ausführungen liegen die beiden Befestigungsachsen FM1, FM2 in einem vertikalen Bereich zwischen den beiden Horizontalebenen PHB und PHC, vor der Vertikalebene PVB, sowie vor der schrägen Ebene IP.

Ebenfalls vorzugsweise liegen die beiden Befestigungsachsen FM1, FM2 innerhalb eines im rechts oben liegenden Tretlager-Quadranten QB1 lokalisierten Winkels α von 30° bis 80°, besonders bevorzugt innerhalb eines Winkels α von 50° bis 60°, wobei der Scheitel des Winkels mit der Drehachse der Tretlagerwelle SB zusammenfällt (vgl. Fig. 3 und 4).

Besonders bevorzugt ist weiterhin eine Kombination der vorstehend genannten Ausführungsformen, bei der die beiden Befestigungsachsen FM1, FM2 in einem vertikalen Bereich zwischen den beiden Horizontalebenen PHB und PHC sowie vor der Vertikalebene PVB, weiterhin vor der schrägen Ebene IP, sowie innerhalb eines Winkels α von 30° bis 80°, besonders bevorzugt innerhalb eines Winkels α von 50° bis 60° liegen.

Mit einer solchen Anordnung der beiden Befestigungsachsen FM1, FM2 als Schnittstellen zwischen Antriebseinheit DU und Fahrradrahmen 1 bzw. zwischen Antriebseinheit DU und Rahmenschnittstellen-Einheit IU lassen sich gegenüber dem Stand der Technik zahlreiche Vorteile erzielen.

Zunächst steht durch derartige Bauweisen wesentlich mehr Bauraum für Baugruppen der Hinterbaufederung 2, DS wie Schwingenlager MP und ggf. Dämpferanlenkung zur Verfügung, da der Fahrradrahmen 1 nicht mehr wie beim Stand der Technik verhältnismäßig weit bis hinter das Tretlager und dabei teilweise sogar bis unterhalb der Tretlagerhöhe reichen muss. Hierdurch verringern sich auch Komplexität, Gewicht und Kosten, und der Rahmenhersteller erhält wesentlich mehr Gestaltungsfreiheit in dem funktional sehr wichtigen Bereich direkt hinter dem Tretlager.

Weiterhin verbessern sich gegenüber dem Stand der Technik, bei dem der Rahmen die Antriebseinheit oftmals zu einem großen Teil umschließt, zumindest jedoch im Bereich der Befestigungsachsen, mit den vorstehend beschriebenen Bauweisen auch die Möglichkeiten zur Kühlung der elektrischen und elektronischen Komponenten der Antriebseinheit. Dies spielt eine zunehmende Rolle bei den aktuell immer weiter abnehmenden Baugrößen dieser Komponenten bei gleichzeitig tendenziell steigenden Motorleistungen.

Bezüglich der seitlichen Positionierung der Rahmenschnittstellen-Anordnungen ist bevorzugt vorgesehen, dass die Schnittstellenebenen PiR zwischen den hinteren Rahmenschnittstellenanordnungen IR der Antriebseinheit DU und den zugehörigen, hinteren Antriebseinheitsschnittstellen-Anordnungen IDR des Rahmens bzw. der Rahmenschnittstellen-Einheit IU im Hinblick auf optimale Momenten- und Kraftübertragung von der Antriebseinheit DU auf den Fahrradrahmen 1, und im Hinblick auf hohe Steifigkeit der Antriebseinheit DU, links und rechts jeweils outboardseitig des Fahrradrahmens 1 positioniert sind, wodurch sich eine entsprechend vorteilhaft große Abstützbreite WS ergibt (vgl. Fig. 7, 11 und 12).

In diesem Zusammenhang kann als Quotient aus der Abstützbreite WS und der Länge (LSB) der Tretlagerwelle (SB), ein Abstützungsfaktor FS gebildet werden (siehe Fig. 11). Der Abstützungsfaktor FS ist größer als 0.5, bevorzugt größer als 0.55 und besonders bevorzugt größer als 0.58.

Alternativ bzw. zusätzlich zu den bevorzugten Werten des Abstützungsfaktors FS wird die Abstützbreite WS so gewählt, dass ein als Quotient aus der Abstützbreite WS und einem Kettenzug-Horizontalabstand DPH zwischen dem Angriffspunkt der Kettenzugkraft FTC und der rechtsseitigen Schnittstellenebene PiR gebildeter Kettenzugfaktor FPC (s. Fig. 12) größer ist als 5, bevorzugt größer als 5.2 und besonders bevorzugt größer als 5.3.

Auf diese Weise wird eine optimale Übertragung der auf die Antriebseinheit DU wirkenden Querkräfte, insbesondere der Pedalkräfte FPE, und ebenso der Kettenzugkräfte FTC, auf kürzestem Weg in den Fahrradrahmen gewährleistet. Auch erhalten hierdurch die an dieser Kraftübertragung beteiligten Strukturen der Antriebseinheit DU und des Fahrradrahmens 1 bzw. der Rahmenschnittstellen-Einheit IU bei geringem Gewicht eine besonders hohe Steifigkeit, was unerwünschten Verwindungen und damit verbundenen Kraftverlusten im Betrieb der Antriebseinheit DU entgegenwirkt.

Bei Antriebseinheiten aus dem Stand der Technik liegen Werte für den Abstützungsfaktor FS hingegen zumeist deutlich unter 0.4, und Werte für den Kettenzugfaktor FPC zumeist deutlich unter 3.

Damit ergeben sich beim Stand der Technik hohe Biegemomente durch die Wirkung der Pedalkräfte FPE und der Kettenzugkräfte FTC, die entweder zu entsprechend großen Verformungen der Antriebseinheit bzw. des Fahrradrahmens im Tretlagerbereich führen, oder mit großen Wandstärken in diesen Bereichen aufgefangen und kompensiert werden müssen, was zu entsprechend hohen Gewichten von Antriebseinheit und Rahmen führt.

Wird die Antriebseinheit DU bezüglich ihrer wesentlichen Abmessungen in Querrichtung (entlang der Achse der Tretlagerwelle SB) asymmetrisch in Bezug auf eine Rahmenmittelebene PFC ausgebildet, wie weiter oben mit Bezug auf Fig. 12 beschrieben, so kann alternativ oder zusätzlich zu einem als Quotient aus Abstützbreite WS und Kettenzug-Horizontalabstand DPH gebildeten Kettenzugfaktor FPC ein Kettenzugfaktor F'PC als Quotient aus einem rechtsseitigen Abstützabstand W'S (siehe Fig. 12) und dem Kettenzug-Horizontalabstand DPH gebildet werden. Dieser Kettenzugfaktor F'PC ist gemäß der vorliegenden Offenbarung größer als 2.5, bevorzugt größer als 2.6 und besonders bevorzugt größer als 2.65.

Insbesondere mit Bezug auf die Darstellung von Fig. 7 ist an dem Gehäuse EC der Controllereinrichtung CMB auch ein Ladeport (in den Figuren nicht dargestellt) zur Verbindung eines bezüglich der Antriebseinheit DU externen oder internen Ladegeräts mit dem Stromnetz angeordnet. Eine weitere Funktion des Gehäuses EC der Controllereinrichtung CMB kann darin bestehen, elektrische bzw. elektronische Baugruppen der Antriebseinheit DU, die im Bereich unterschiedlicher Seiten der Antriebseinheit DU angeordnet sind, miteinander zu verbinden, ohne dass hierzu anderweitig Stromleitungen innerhalb der Motoreinrichtung ME, quer durch die Motoreinrichtung ME oder sonstige fliegende Leitungsverbindungen außerhalb der Motoreinrichtung ME erforderlich sind.

Beispielsweise kann eine Drehmoment-Sensoreinrichtung der Antriebseinheit DU in einem rechtsseitigen Bereich der Antriebseinheit DU in der Nähe der Drehmomentverbindung zum Kettenrad RC angeordnet sein, während zumindest Teile des Motorcontrollers CB, insbesondere Teile der Leistungselektronik, in einem linksseitigen Bereich der Antriebseinheit in der Nähe des Elektromotors angeordnet sein können. In solchen Fällen bietet das Gehäuse EC der Controllereinrichtung CB die Möglichkeit, beispielsweise die Drehmoment-Sensoreinrichtung mit der Leistungselektronik oder mit deren Ansteuerungs-Schaltung durch das Gehäuse EC hindurch zu verbinden, ohne dass Leitungen weder durch die Motoreinrichtung ME noch, weitgehend ungeschützt, außerhalb der Motoreinrichtung ME verlegt werden müssen. Insbesondere letzteres ist im Stand der Technik üblich.

Es ist auch möglich und vorgesehen, lediglich bestimmte Teile der Leistungselektronik zum Betrieb des Elektromotors, insbesondere die relativ voluminösen Kondensatoren einer elektronischen Motorkommutierung im Gehäuse EC der Controllereinrichtung CMB anzuordnen, während andere Teile der Leistungselektronik, insbesondere die Leistungstransistoren, im Antriebsgehäuse HC angeordnet sind, beispielsweise auf einer Innenseite insbesondere des linksseitigen Gehäusedeckels CHL. Letzteres ermöglicht eine optimale Kühlung der Leistungstransistoren insbesondere dann, wenn der entsprechende Gehäusedeckel CHL außenseitig mit Kühlrippen versehen ist (vgl. Fig. 4, 7, 10, 14 und 16).

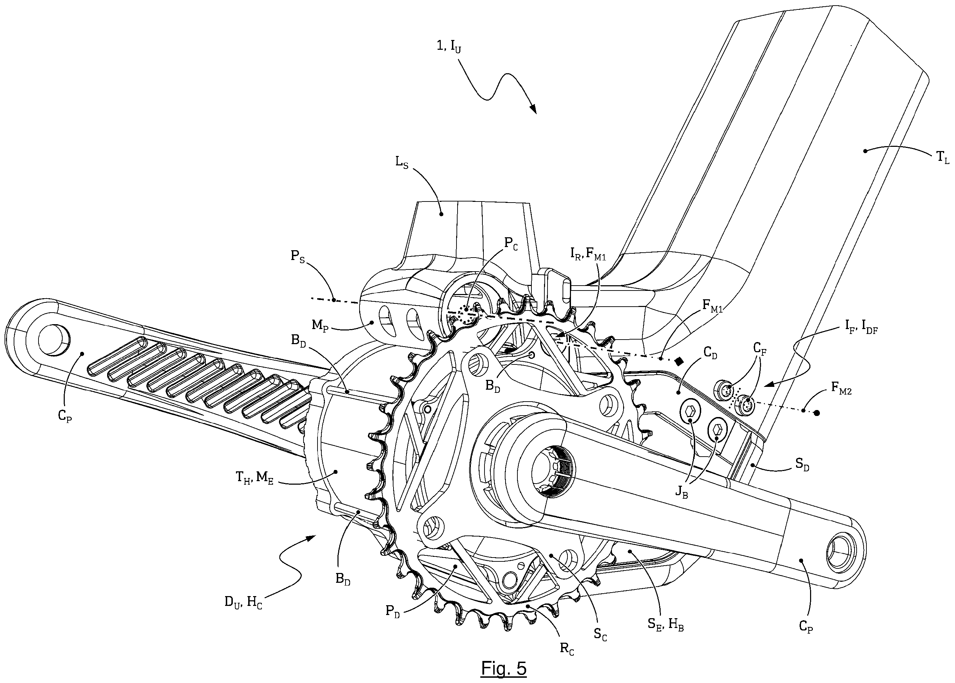

Eine zusätzliche Kühlungsmöglichkeit für die Motoreinrichtung ME kann dadurch geschaffen werden, dass insbesondere die motorseitige, also üblicherweise die linke Kurbel, mit Kühlrippen versehen wird (vgl. Fig. 5 und 8). Dementsprechend kann Wärme von der Leistungselektronik oder von der Motoreinrichtung ME durch die Tretlagerwelle SB in die linke Kurbel CP fließen und dort an die Umgebungsluft abgegeben werden.

Fig. 15C zeigt einen Längsschnitt durch eine linke hintere Rahmenschnittstellenanordnung IR und durch die zugehörige linke hintere Antriebseinheitsschnittstellen-Anordnung IDR der eines Fahrradrahmens 1 bzw. einer Rahmenschnittstellen-Einheit IU mit einem dort angeordneten Rahmen-Ausgleichsadapter AO zur variablen spielfreien Einstellung der Klemmung in Axialrichtung zwischen Rahmenschnittstellenanordnung IR und Antriebseinheitsschnittstellen-Anordnung IDR. Dabei lässt sich der Schnittverlauf des in Fig. 15C dargestellten Längsschnitts aus den Figuren 15A und 15B ableiten.

Wie aus einer Zusammenschau von Fig. 15C mit Fig. 7 und 13 hervorgeht, umfasst der Ausgleichsadapter AO zwei an ihrem Außenumfang keilförmig zulaufende Schubringe RT1, RT2, einen entlang seiner Umfangsrichtung in mehrere Segmente aufgeteilten Expansionsring RE sowie eine Ausrichtungshülse BA. Beim dargestellten Ausführungsbeispiel ist der linksseitige Schubring RT1 einstückig mit der Ausrichtungshülse BA ausgebildet.

Bei der Montage der Antriebseinheit DU am Fahrradrahmen 1 bzw. an einer Rahmenschnittstellen-Einheit IU wird der Verbindungsbolzen BC in die Schraubhülse BS, eingeschraubt (s. Fig. 7).

Beim Festziehen des Verbindungsbolzens BC wird dann der Schubringe RT1, RT2, Expansionsring RE sowie Ausrichtungshülse BA umfassende Ausgleichsadapter AO in der Aufnahmebohrung OR der hinteren Rahmenschnittstellenanordnung IR nach innen gezogen (in Fig. 15C zeichnungsbezogen nach rechts gemäß Pfeilrichtung P) so lange, bis der innere, rechtsseitige Schubring RT2 an der äußeren Stirnseite FE der hinteren rahmenseitigen Antriebseinheitsschnittstellen-Anordnung IDR, bzw. am Kragen einer dazwischen angeordneten Führungsbuchse BG zur Anlage kommt. Die Führungsbuchsen BG können insbesondere aus einem schwingungsdämpfenden Hochleistungskunststoff bestehen, die Übertragung von Motorgeräuschen auf den Fahrradrahmen 1 reduziert wird.

Beim weiteren Festziehen des Verbindungsbolzens BC erfolgt dann eine axiale Kompression des Ausgleichsadapters AO dergestalt, dass die Schubringe RT1 und RT2 in Axialrichtung in den Expansionsring RE gepresst werden, wodurch sich der Außendurchmesser des Expansionsrings RE vergrößert so lange, bis der Expansionsring RE reibschlüssig fest in die Aufnahmebohrung OR gepresst ist.

Es ergibt sich somit lediglich durch das Festziehen des Verbindungsbolzens BC selbsttätig eine sowohl axial als auch radial (bezogen auf den Verbindungsbolzen BC) spielfreie, feste Verbindung zwischen der Antriebseinheit DU und dem Fahrradrahmen 1 bzw. der Rahmenschnittstellen-Einheit IU.

Dies beschleunigt und erleichtert die Montage der Antriebseinheit DU, insbesondere unter dem Gesichtspunkt, dass diese in der Praxis des Fahrradmarkts mit verschiedensten Fahrradrahmen 1 bzw. mit ggf. unterschiedlichen Rahmenschnittstellen-Einheiten IU kombiniert werden wird, wobei der Fahrradrahmen 1, oder ggf. die Rahmenschnittstellen-Einheit IU, von verschiedensten Herstellern stammen bzw. zugeliefert sein können.

Hierdurch können sich erfahrungsgemäß unterschiedlichste Toleranzsituationen bezüglich der Abstützbreite WS der hinteren Antriebseinheitsschnittstellen-Anordnung IDR ergeben. Derartige unterschiedliche Toleranzsituationen, je nach dem Ursprung des Fahrradrahmens bzw. der Rahmenschnittstellen-Einheit IU, lassen sich somit durch den Ausgleichsadapter AO auf einfachste Weise handhaben und ausgleichen.

Eine exakte Anpassung an etwaige Toleranzen des Fahrradrahmens 1 bzw. der Rahmenschnittstellen-Einheit IU und eine feste spielfreie Verbindung zwischen der Antriebseinheit DU und dem Fahrradrahmen 1 bzw. der Rahmenschnittstellen-Einheit IU in allen drei Raumrichtungen ist nicht nur von Bedeutung hinsichtlich der sicheren und zuverlässigen Übertragung der erheblichen Antriebs- und Kettenzugkräfte, wie weiter oben bei Fig. 2ff. beschrieben, sondern auch zur Vermeidung von störenden Geräuschen wie beispielsweise Knarzen oder Quietschen.

Da beim Stand der Technik üblicherweise mindestens zwei oder mehr Befestigungsachsen zur Verbindung von Antriebseinheit und Fahrradrahmen zum Einsatz kommen, bei denen jedoch, anders als bei der vorliegenden Offenbarung, unter den verschiedenen Befestigungsachsen keine spezifische Aufgabenteilung hinsichtlich Kraftübertragung, Momentenübertragung und Festlegung der Bewegungsfreiheitsgrade der Antriebseinheit relativ zum Fahrradrahmen getroffen wird, ergeben sich dort häufig erhebliche Schwierigkeiten hinsichtlich des Toleranzausgleichs bei der Montage der Antriebseinheit im Fahrradrahmen, sowie im Hinblick auf eine dauerhaft feste und spielfreie Verbindung zwischen Antriebseinheit und Fahrradrahmen.

Wie bereits weiter oben bei der Beschreibung von Fig. 2ff. ausführlich dargelegt, wird diese Problematik mit der Antriebseinheit DU gemäß der vorliegenden Offenbarung eliminiert insbesondere dadurch, dass genau zwei Befestigungsachsen vorgesehen sind, von denen die hintere Befestigungsachse sehr nahe an den wesentlichen Kraftangriffslinien positioniert ist und die Festlegung aller Bewegungsfreiheitsgrade außer einem RotationsFreiheitsgrad FR der Antriebseinheit DU übernimmt, und dass die vordere Befestigungsachse lediglich und spezifisch als Drehmomentausleger zur Festlegung des verbleibenden Rotationsfreiheitsgrads FR der Antriebseinheit DU ausgebildet ist.

Fig. 16 zeigt die Antriebseinheit DU gemäß Fig. Fig. 2 bis 15 nochmals in einer perspektivischen Gesamtansicht von hinten links betrachtet. Man erkennt wieder, dass die Antriebseinheit DU eine einstückig handhabbare, von einem gemeinsamen Gehäuse HC umschlossene Einheit darstellt, die insbesondere die Motoreinrichtung ME und die Energiespeichereinrichtung SE umfasst. Auch die beiden Befestigungsachsen FM 1 und FM2 zur Verbindung mit dem Fahrradrahmen 1 sind gut erkennbar.

Anstelle der in den Fig. 2 bis 16 dargestellten Batterie SE kann die Antriebseinheit DU modular auch mit anderen Batteriegrößen ausgestattet werden. Insbesondere kann der obere im wesentlichen prismatische Teil der Batterie gemäß Fig. 16, der zum Einschub in das Unterrohr TL des Fahrradrahmens 1 vorgesehen ist (vgl. Fig. 9 und 10) länger oder kürzer ausgebildet werden, um auf diese Weise Batterien mit größerem oder kleinerem Energieinhalt darzustellen. Ebenso kann insbesondere dieser in das Unterrohr TL einzuschiebende Bereich entlang der Fahrtrichtung des Fahrrads gesehen schmaler als bei der Batterie gemäß Fig. 2 bis 16 ausgeführt werden (beispielsweise mit lediglich zwei statt drei Reihen von Batteriezellen), so dass sich eine besonders schmale seitliche Silhouette des Fahrradrahmens ergibt.

## Patentansprüche

1. Elektrische Fahrrad-Antriebseinheit (DU) zur Anordnung in einem Tretlagerbereich (R) eines Fahrradrahmens (1), die Antriebseinheit (DU) umfassend
- eine Tretlagerbaugruppe (AB) mit einer Tretlagerwelle (SB),
- eine elektrische Motoreinrichtung (ME) mit einer Motorwelle, welche koaxial oder achsparallel zur Tretlagerwelle angeordnet ist,
- eine Energiespeichereinrichtung (SE) zur Energieversorgung der Motoreinrichtung (ME),
- wobei die Energiespeichereinrichtung (SE) in einem betriebsbereit in den Fahrradrahmen (1) eingebauten Zustand der Antriebseinheit (DU) zumindest zu einem wesentlichen Teil in einem einen geschlossenen Rohrquerschnitt aufweisenden Unterrohr TL des Fahrradrahmens (1) anordenbar und zur Entnahme aus dem Fahrradrahmen (1) in einer koaxial zu einer Längsachse des Unterrohrs TL verlaufenden Entnahmerichtung eingerichtet ist,
**dadurch gekennzeichnet,**
**dass** die Energiespeichereinrichtung (SE) in dem betriebsbereit in den Fahrradrahmen (1) eingebauten Zustand der Antriebseinheit (DU) unmittelbar an einem Gehäuse (HM) der Motoreinrichtung (ME) oder in einem gemeinsamen Gehäuse (HC) von Motoreinrichtung (ME) und Energiespeichereinrichtung (SE) befestigt ist.

2. Antriebseinheit (DU) nach Anspruch 1,
**dadurch gekennzeichnet,**
**dass** die Energiespeichereinrichtung (SE) in dem betriebsbereit in den Fahrradrahmen (1) eingebauten Zustand der Antriebseinheit (DU) unmittelbar befestigt ist ausschließlich an einem Gehäuse (HM) der Motoreinrichtung (ME) oder in einem gemeinsamen Gehäuse (HC) von Motoreinrichtung (ME) und Energiespeichereinrichtung (SE).

3. Antriebseinheit (DU) nach Anspruch 1 oder 2,
**dadurch gekennzeichnet,**
**dass** die Antriebseinheit zur zumindest teilweisen Umschließung der Energiespeichereinrichtung von einem Gehäuse der Motoreinrichtung oder von einem gemeinsamen Gehäuse von Motoreinrichtung und Energiespeichereinrichtung eingerichtet ist

4. Antriebseinheit (DU) nach einem der Ansprüche 1 bis 3,
**dadurch gekennzeichnet,**
**dass** Antriebseinheit (DU) und Energiespeichereinrichtung (SE), in einem betriebsbereit in den Fahrradrahmen (1) eingebauten Zustand der Antriebseinheit (DU), zur Anordnung der Energiespeichereinrichtung (SE) zu einem wesentlichen Teil außerhalb eines Unterrohrs (TL) des Fahrradrahmens (1) eingerichtet sind.

5. Antriebseinheit (DU) nach einem der Ansprüche 1 bis 4
**dadurch gekennzeichnet,**
**dass** sich die Energiespeichereinrichtung (SE) in einer dem montierten Zustand der Antriebseinheit (DU) an dem Fahrradrahmen (1) entsprechenden Lage zumindest teilweise unterhalb der Drehachse der Tretlagerwelle (SB) befindet.

6. Antriebseinheit (DU) nach einem der Ansprüche 1 bis 5,
**dadurch gekennzeichnet,**
**dass** ein Massenschwerpunkt (CGC) der Antriebseinheit (DU) innerhalb des Tretlagerbereichs (R) liegt.

7. Antriebseinheit (DU) nach Anspruch 6
**dadurch gekennzeichnet,**
**dass** sich der Massenschwerpunkt (CGC) der Antriebseinheit (DU) in einer Fahrrad-Seitenansicht und in einer dem montierten Zustand der Antriebseinheit (DU) an dem Fahrradrahmen (1) entsprechenden Lage der Antriebseinheit (DU) innerhalb eines Umkreises mit dem Radius 175 mm (R1), bevorzugt innerhalb eines Umkreises mit dem Radius 125 mm (R3), besonders bevorzugt innerhalb eines Umkreises mit dem Radius 100 mm (R4) um die Drehachse der Tretlagerwelle (SB) befindet.

8. Antriebseinheit (DU) nach Anspruch 6 oder 7,
**dadurch gekennzeichnet,**
**dass** sich der Massenschwerpunkt (CGC) der Antriebseinheit (DU) in dem betriebsbereit in den Fahrradrahmen (1) eingebauten Zustand der Antriebseinheit (DU) in einer Seitenansicht von rechts und bezogen auf die Drehachse der Tretlagerwelle (SB) innerhalb eines rechts oben liegenden Tretlager-Quadranten (QB1) mit der Seitenlänge 175 mm (R1), bevorzugt innerhalb eines Tretlager-Quadranten (QB3) mit der Seitenlänge 125 mm (R3), besonders bevorzugt innerhalb eines Tretlager-Quadranten (QB4) mit der Seitenlänge 100 mm (R4) befindet.

9. Antriebseinheit (DU) nach einem der Ansprüche 6 bis 8
**dadurch gekennzeichnet,**
**dass** sich der Massenschwerpunkt (CGC) der Antriebseinheit (DU), bezogen auf die Drehachse der Tretlagerwelle (SB), in einer Höhe (HGC) von 50 mm, bevorzugt von 30 mm, besonders bevorzugt von 20 mm oberhalb der Drehachse der Tretlagerwelle (SB) befindet.

10. Antriebseinheit (DU) nach einem der Ansprüche 1 bis 9
**gekennzeichnet durch**
ein ausschließlich an dem Gehäuse (HM) der Motoreinrichtung (ME) oder an dem gemeinsamen Gehäuse (HC) der Antriebseinheit (DU) befestigtes Antriebsschutzschild (SD), wobei das Antriebsschutzschild (SD) gleichzeitig eine bewegliche Verschlussklappe zur Abdeckung und/oder Halterung der Energiespeichereinrichtung (SE) bildet.

11. Antriebseinheit (DU) nach einem der Ansprüche 1 bis 10
**gekennzeichnet durch**
genau zwei Rahmenschnittstellenanordnungen (IR, IF), welche eine hintere Befestigungsachse (FM1) und eine vordere Abstützungsachsanordnung mit einer vorderen Befestigungsachse (FM2) definieren.

12. Antriebseinheit (DU) nach Anspruch 11
**dadurch gekennzeichnet,**
**dass** die hintere Befestigungsachse (FM1) in dem betriebsbereit in den Fahrradrahmen (1) eingebauten Zustand der Antriebseinheit (DU) in einem vertikalen Bereich oberhalb einer Horizontalebene PHB angeordnet ist, welche die Drehachse der Tretlagerwelle (SB) enthält, und unterhalb einer Horizontalebene PHC, welche den Angriffspunkt PC der Kettenzugkraft FTC enthält.

13. Antriebseinheit (DU) nach Anspruch 11 oder 12,
**dadurch gekennzeichnet,**
**dass** in dem betriebsbereit in den Fahrradrahmen (1) eingebauten Zustand der Antriebseinheit (DU) die beiden Befestigungsachsen (FM1) und (FM2) vor einer Vertikalebene PVB angeordnet sind, welche die Drehachse der Tretlagerwelle (SB) enthält.

14. Antriebseinheit (DU) nach einem der Ansprüche 11 bis 13,
**dadurch gekennzeichnet,**
**dass** die beiden Befestigungsachsen (FM1) und (FM2) vor einer schrägen Ebene IP angeordnet sind, welche die Drehachse der Tretlagerwelle (SB) enthält, wobei die schräge Ebene IP relativ zu einer Horizontalebene um einen Winkel (β) von 50° nach vorne gekippt ist.

15. Antriebseinheit (DU) nach einem der Ansprüche 11 bis 14,
**dadurch gekennzeichnet,**
**dass** die beiden Befestigungsachsen (FM1) und (FM2) innerhalb eines in dem rechten oberen Tretlager-Quadranten (QB1) lokalisierten Winkels (α) von 30° bis 80°, besonders bevorzugt innerhalb eines Winkels (α) von 50° bis 60° angeordnet sind, wobei der Scheitel des Winkels (α) mit der Drehachse der Tretlagerwelle (SB) zusammenfällt.

16. Antriebseinheit (DU) nach einem der Ansprüche 11 bis 15,
**dadurch gekennzeichnet,**
**dass** eine Abstützbreite (WS) als Abstand zwischen einer linksseitigen und einer rechtsseitigen Schnittstellenebene (PiR) der hinteren Rahmenschnittstellenanordnung (IR) so gewählt ist, dass ein als Quotient aus der Abstützbreite (WS) und der Länge (LSB) der Tretlagerwelle (SB) gebildeter Abstützungsfaktor FS größer ist als 0.5, bevorzugt größer als 0.55 und besonders bevorzugt größer als 0.58.

17. Antriebseinheit (DU) nach einem der Ansprüche 11 bis 16,
**dadurch gekennzeichnet,**
**dass** eine Abstützbreite (WS) als Abstand zwischen einer linksseitigen und einer rechtsseitigen Schnittstellenebene (PiR) der hinteren Rahmenschnittstellenanordnung (IR) so gewählt ist, dass ein als Quotient aus der Abstützbreite (WS) und einem Kettenzug-Horizontalabstand (DPH) gebildeter Kettenzugfaktor FPC größer ist als 5, bevorzugt größer als 5.2 und besonders bevorzugt größer als 5.3.

18. Antriebseinheit (DU) nach einem der Ansprüche 1 bis 17,
**dadurch gekennzeichnet,**
**dass** die Antriebseinheit (DU) zur Fixierung sämtlicher Bewegungsfreiheitsgrade der Antriebseinheit (DU) gegenüber dem Fahrradrahmen (1) bzw. gegenüber einer Rahmenschnittstellen-Einheit (IU) über die hintere Rahmenschnittstellenanordnung (IR) eingerichtet ist, außer einem Rotationsfreiheitsgrad (FR) um eine zur Drehachse der Tretlagerwelle (SB) parallele Rotationsachse (FM1).

19. Antriebseinheit (DU) nach Anspruch 18,
**dadurch gekennzeichnet,**
**dass** die Antriebseinheit (DU) zur Fixierung des Rotationsfreiheitsgrads (FR) gegenüber dem Fahrradrahmen (1) bzw. gegenüber der Rahmenschnittstellen-Einheit (IU) durch die vordere Rahmenschnittstellenanordnung (IF) mittels einer Reibungsverbindung (CF, WF) eingerichtet ist.

20. Antriebseinheit (DU) nach einem der Ansprüche 11 bis 19,
**dadurch gekennzeichnet,**
**dass** die hintere Rahmenschnittstellenanordnung (IR) einen Rahmen-Ausgleichsadapter (AO) zum Ausgleich von Breitentoleranzen des Fahrradrahmens (1) und/oder der Rahmenschnittstellen-Einheit (IU) aufweist, wobei der Rahmen-Ausgleichsadapter (AO) zur bezüglich der hinteren Befestigungsachse (FM1) radialen Fixierung der hinteren Rahmenschnittstellenanordnung (IR) relativ zum Fahrradrahmen (1) bzw. relativ zur Rahmenschnittstellen-Einheit (IU) sowie zum stufenlos spielfrei einstellbaren Axial-Toleranzausgleich zwischen hinterer Rahmenschnittstellenanordnung (IR) und Fahrradrahmen (1) bzw. Rahmenschnittstellen-Einheit (IU) eine in einer Aufnahmebohrung (OR) des Antriebsgehäuses (HC) axial verschiebbar aufnehmbare Radialklemmeinrichtung (RE, RT1, RT2) umfasst.

21. Antriebseinheit (DU) nach einem der Ansprüche 1 bis 20,
**gekennzeichnet durch**
ein in einem Raumbereich zwischen Motoreinrichtung (ME) und Energiespeichereinrichtung (SE) angeordnetes, hermetisch geschlossenes Controllergehäuse (EC) zur Aufnahme einer Controllereinrichtung (CMB) für die Steuerung von Motoreinrichtung (ME) und/oder Energiespeichereinrichtung (SE).

22. Antriebseinheit (DU) nach Anspruch 21,
**gekennzeichnet durch**
eine am Controllergehäuse (EC) angeordnete bzw. mit dem Controllergehäuse (EC) verbundene Stromschnittstelle (IC) zur Verbindung der Controllereinrichtung (CMB) mit der Energiespeichereinrichtung (SE) mit parallel zu einer Entnahmerichtung (DR) der Energiespeichereinrichtung (SE) angeordneten Schnittstellenflächen (Pi) dergestalt, dass die Stromschnittstelle **durch** Entnahme der Energiespeichereinrichtung (SE) aus der Antriebseinheit (DU) geöffnet und **durch** Einsetzen der Energiespeichereinrichtung (SE) in die Antriebseinheit (DU) verbunden wird.

23. Antriebseinheit (DU) nach einem der Ansprüche 1 bis 22,
**dadurch gekennzeichnet,**
**dass** das Gehäuse (HM) der Motoreinrichtung (ME) oder das gemeinsame Gehäuse (HC) von Motoreinrichtung (ME) und Energiespeichereinrichtung (SE) Lageraufnahmen (MP) für eine Schwinge (AS) eines gefederten Hinterbaurahmens (2) aufweist.

24. Fahrradrahmen (1) oder Rahmenschnittstellen-Einheit (IU), aufweisend eine hintere Antriebseinheitsschnittstellen-Anordnung (IDR) und eine vordere Antriebseinheitsschnittstellen-Anordnung (IDF) zur Verbindung mit einer Antriebseinheit (DU) nach einem der Ansprüche 1 bis 23,
**gekennzeichnet durch**
genau zwei Antriebseinheitsschnittstellen-Anordnungen (IDR, IDF), welche eine hintere Befestigungsachse (FM1) und und eine vordere Abstützungsachsanordnung mit einer vorderen Befestigungsachse (FM2) definieren, wobei über die hintere Antriebseinheitsschnittstellen-Anordnung (IDR) sämtliche Bewegungsfreiheitsgrade der Antriebseinheit (DU) gegenüber dem Fahrradrahmen (1) bzw. der Rahmenschnittstellen-Einheit (IU) festlegbar sind außer einem Rotationsfreiheitsgrad (FR) um die hintere Befestigungsachse (FM1), und wobei die vordere Antriebseinheitsschnittstellen-Anordnung (IDF) als Drehmomentstütze zur Festlegung des Rotationsfreiheitsgrads (FR) der Antriebseinheit ausgebildet ist.

25. Fahrradrahmen (1) oder Rahmenschnittstellen-Einheit (IU) nach Anspruch 24,
**gekennzeichnet durch**
eine Anordnung von zwei Befestigungsachsen (FM1) und (FM2) analog zur Anordnung der beiden Befestigungsachsen (FM1) und (FM2) bei der Antriebseinheit (DU) nach einem der Ansprüche 1 bis 23.

26. Fahrradrahmen (1) oder Rahmenschnittstellen-Einheit (IU) nach Anspruch 24 oder 25,
**gekennzeichnet durch**
einen Abstützungsfaktor (FS) analog zu Anspruch 16 und/oder einen Kettenzugfaktor (FPC) analog zu Anspruch 17.

27. Energiespeichereinrichtung (SE) für eine Antriebseinheit (DU) nach einem der Ansprüche 1 bis 23,
**gekennzeichnet durch**
die Energiespeichereinrichtung (SE) betreffende Merkmale eines der Ansprüche 1 bis 23.
